(19) **Europäisches Patentamt / European Patent Office / Office européen des brevets**

(11) **EP 4 757 336 A1**

(12) **EUROPEAN PATENT APPLICATION**

(43) Date of publication:
**10.06.2026 Bulletin 2026/24**

(21) Application number: **25220336.9**

(22) Date of filing: **03.12.2025**

(51) International Patent Classification (IPC):
*H04N 25/47* (2023.01)    *H04N 25/77* (2023.01)
*H04N 25/773* (2023.01)    *H04N 25/78* (2023.01)

(52) Cooperative Patent Classification (CPC):
**H04N 25/773; H04N 25/47; H04N 25/77; H04N 25/78**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **04.12.2024 JP 2024211112**

(71) Applicant: **Canon Kabushiki Kaisha Tokyo, 146-8501 (JP)**

(72) Inventor: **YOSHIDA, Takayuki Ohta-ku, Tokyo, 146-8501 (JP)**

(74) Representative: **TBK Bavariaring 4-6 80336 München (DE)**

(54) **PHOTOELECTRIC CONVERSION DEVICE**

(57) A photoelectric conversion device (100) includes an avalanche photodiode (201), an output holding circuit (230) configured to hold a light reception signal based on an output of the avalanche photodiode (201), a first logic circuit (241) to which the light reception signal held in the output holding circuit (230) and a first reference signal indicating a first weight amount are input, and a first accumulating circuit (251) configured to hold a first count value obtained by accumulating an output of the first logic circuit (241). The first accumulating circuit (251) resets the first count value for each first period. The first period is divided into a plurality of second periods. The first weight amount changes for each second period. The output holding circuit (230) resets the light reception signal for each second period.

FIG. 7

**Description**

TECHNICAL FIELD

The present disclosure relates to a photoelectric conversion device.

BACKGROUND

A time correlation image sensor is disclosed in Shigeru Ando and Akira Kimachi: "Time-Domain Correlation Imaging and Its Applications", The transactions of the Institute of Electrical Engineers of Japan, a publication of Sensors and Micromachines Society, Volume 129, No. 5, pp. 129-137, May 1, 2009. A pixel circuit of the time correlation image sensor of "Time-Domain Correlation Imaging and Its Applications" includes a photodiode generating a photocurrent and a plurality of capacitors each storing photocarriers. Thus, the time correlation image sensor of "Time-Domain Correlation Imaging and Its Applications" can realize time correlation imaging.

SUMMARY

In a time correlation image sensor as exemplified in "Time-Domain Correlation Imaging and Its Applications", signal acquisition under various illuminances is required in some cases.

The present disclosure is directed to provide a photoelectric conversion device capable of acquiring signals under various illuminances.

The present disclosure in its first aspect provides a photoelectric conversion device as specified in claim 1. Optional features are specified in claims 2 to 11 and claims 22 to 25.

The present disclosure in its second aspect provides a photoelectric conversion device as specified in claim 1. Optional features are specified in claims 13 to 25.

Features of the present disclosure will become apparent from the following description of embodiments with reference to the attached drawings. The following description of embodiments is described by way of example.

BRIEF DESCRIPTION OF THE DRAWINGS

Fig. 1 is a schematic diagram illustrating an overall configuration of a photoelectric conversion device according to a first embodiment.

Fig. 2 is a schematic block diagram illustrating a configuration example of a sensor substrate according to the first embodiment.

Fig. 3 is a schematic block diagram illustrating a configuration example of a circuit substrate according to the first embodiment.

Fig. 4 is a diagram illustrating a relationship between a main frame period and sub-frame periods and a temporal change in a weight amount according to the first embodiment.

Fig. 5 is a schematic block diagram illustrating a configuration example of one pixel of a photoelectric conversion unit and a pixel signal processing unit according to the first embodiment.

Figs. 6A, 6B, and 6C are diagrams illustrating an operation of an avalanche photodiode according to the first embodiment.

Fig. 7 is a diagram illustrating a configuration of a pixel according to the first embodiment.

Fig. 8 is a timing chart illustrating a pixel driving method according to the first embodiment.

Fig. 9 is a timing chart illustrating the pixel driving method according to the first embodiment.

Fig. 10 is a timing chart illustrating the pixel driving method according to the first embodiment.

Fig. 11 is a diagram illustrating a configuration of a pixel according to a second embodiment.

Fig. 12 is a timing chart illustrating a pixel driving method according to the second embodiment.

Fig. 13 is a diagram illustrating a configuration of a pixel according to a third embodiment.

Fig. 14 is a diagram illustrating a configuration of a pixel according to a fourth embodiment.

Fig. 15 is a timing chart illustrating a pixel driving method according to the fourth embodiment.

Fig. 16 is a block diagram illustrating a schematic configuration of equipment according to a fifth embodiment.

Figs. 17A and 17B are block diagrams illustrating a schematic configuration of equipment according to a sixth embodiment.

DESCRIPTION OF THE EMBODIMENTS

Hereinafter, embodiments will be described with reference to the drawings. In the embodiments described below, an imaging device will be mainly described as an example of a photoelectric conversion device. However, the photoelectric conversion device to which the technology of each embodiment is applicable is not limited to an imaging device, and may be another device. For example, the technology of each embodiment can also be applied to a ranging device (for example, a focus detection device or a device for measuring distance using the time of flight (ToF)) and a photometric device (device for measuring the amount of incident light).

Note that the conductivity types of the transistors described in the embodiments described below are merely examples, and the conductivity types of the transistors are not limited to the conductivity types described in the embodiments. The conductivity type described in the embodiment may be appropriately changed, and the potentials of a gate, a source, or a drain of the transistor may be appropriately changed in accordance with the change. For example, in a transistor that operates as a switch, when the conductivity type is changed, the low level and the high level of the potential supplied to the gate are reversed with respect to the description in the embodiment.

In the following embodiments, connection between elements in a circuit may be described. In this case, even when an element is interposed between the elements of interest, the elements of interest are regarded as being connected to each other unless otherwise specified. For example, an element A is connected to one node of a capacitor C having a plurality of nodes, and an element B is connected to the other node of the capacitor C. Even in such a case, the element A and the element B are regarded as being connected to each other unless otherwise specified.

First Embodiment

Prior to the description of a photoelectric conversion device of the present embodiment, the principles of a time correlation image sensor and an event-based sensor will be schematically described.

The time correlation image sensor includes a photodiode and a configuration for acquiring a signal output from the photodiode in a plurality of sections. A signal for each pixel for generating an image is expressed by the following Expression (1).

$$\left( v \cdot \nabla + \frac{\partial}{\partial t} \right) f(x,y,t) = 0 \qquad (1)$$

The $f(x,y,t)$ in Expression (1) is a brightness of the pixel $(x,y)$ at time t. In addition, the $v$ is a velocity of the pixel $(x,y)$ (time derivative of the pixel $(x,y)$). The $\nabla$ is a nabla operator (vector differential operator).

An exposure time in acquisition of an image of one frame is defined as T. An image $g_n(x,y)$ is represented by the following Expression (2).

$$g_n(x,y) = \int_0^T f(x,y,t) \cdot e^{-i \cdot n \cdot \Delta_\omega \cdot t} dt \,, \quad \Delta_\omega = \frac{2\pi}{T} \qquad (2)$$

As indicated in Expression (2), the image $g_n(x,y)$ is obtained by multiplying the brightness $f(x,y,t)$ by a reference signal represented by a complex number $e^{-in\Delta wt}$ and integrating the result in the range of one frame period. The captured image $g_n(x,y)$ satisfies the following Expression (3).

$$v \cdot \nabla g_n(x,y) + \left[ f(x,y,t) \right]_0^T + i \cdot n \cdot \Delta_\omega g_n(x,y) = 0, \, ^\forall n = 0,1,2\cdots \qquad (3)$$

The second term on the left side of Expression (3) indicates a boundary value of integration. Since the Expression (3) is a plurality of expressions different from each other according to the value of n, Expression (3) forms simultaneous equations. Therefore, for example, by solving simultaneous equations using two images $g_0(x,y)$ and $g_1(x,y)$, it is possible to eliminate the boundary value of integration. The time correlation image sensor can output an intensity image $g_0(x,y)$ consisting of only the real part, and a real part and an imaginary part of a complex correlation image $g_n(x,y)$ (hereinafter, the complex correlation image is also referred to as a time correlation signal). Therefore, by substituting and solving the output signal of the time correlation image sensor into the simultaneous equations of Expression (3), it is possible to obtain the velocity v, that is, the optical flow in each pixel $(x,y)$.

In the signal processing of the time correlation image sensor, it is necessary to calculate the integral in the range of one frame period as indicated in Expression (2). Therefore, the output timing of the correlation image is limited to the unit of one frame period. In the time correlation image sensor, the cycle of the reference signal and the cycle of the shutter opening period are made to coincide with each other. Therefore, the correlation image is output at a frequency corresponding to the cycle of the shutter opening period.

An event-based sensor will now be outlined. The event-based sensor detects a change in luminance within an imaging range, and outputs an event signal each time a change in luminance is detected. The event-based sensor includes, for example, a plurality of pixels arranged in a matrix. That is, the event signal is a signal associated with an event, and the event is a luminance change of a pixel. As one example, the event signal includes a time at which an event is detected, a position of a pixel at which the event is detected, and a change in a pixel value. The time at which the event is detected can be measured based on the time (event camera time) indicated by an internal clock of the event-based sensor.

Note that the reference of the time at which the event is detected may be reset as necessary. The change in the pixel value is, for example, a change in luminance. The change in the pixel value may be the amount of change itself, or may be information indicating whether the luminance change is positive or negative.

The event-based sensor outputs an event signal when a luminance change occurs, and does not output an event signal when a luminance change does not occur. That is, the event-based sensor asynchronously outputs the event signal. Note that asynchronously outputting means outputting a signal in units of pixels independently in terms of time.

The operation of the event-based sensor is expressed by the following Expression (4).

$$Y(x, y, t) = Y(x, y, t_0) + \Delta Y \sum_i \int_{t_0}^t ds \delta(s - s_i) \cdot p(x, y, s_i) \qquad (4)$$

The $Y(x,y,t)$ in Expression (4) is an image at time t. Time $t_0$ is the measurement start time. The image $Y(x,y,t_0)$ is an initial image stored at time $t_0$. In general, the image $Y(x, y, t_0)$ can be zero. The $\Delta Y$ is a threshold value (absolute value of luminance change) of occurrence of an event. The $p(x,y,s_i)$ is the i-th event signal that occurs in the pixel $(x,y)$, and the value of $p(x,y,s_i)$ at the time of event detection is 1 or -1 depending on whether the luminance change is positive or negative. The $\delta (s-s_i)$ is a Dirac delta function.

Event-based sensors may be provided with the ability to output time correlation signals, such as time correlation image sensors. When the time t is the end time of the frame period, the output signals of the time correlation image sensor can be expressed by the following Expressions (5) to (7) using an angular velocity $\omega$ ($\omega=2\pi/T$).

$$g_0(x, y, t) = \int_{t-T}^t f(x, y, s)ds \qquad (5)$$

$$\mathrm{Re}\, g_1(x, y, t) = \int_{t-T}^t \cos(\omega(s-t))f(x, y, s)ds \qquad (6)$$

$$\mathrm{Im}\, g_1(x, y, t) = \int_{t-T}^t \sin(\omega(s-t))f(x, y, s)ds \qquad (7)$$

In the time correlation image sensor, charges based on current output from a photodiode are accumulated in a capacitor. The accumulated charges correspond to luminance. On the other hand, in the event-based sensor, a signal obtained by quantizing a change in current output from the photodiode is output. Therefore, in the event-based sensor, the output from the photodiode at the time s can be divided into a constant term f(x,y,t-T) having a constant value within the measurement period and a variable term $\delta$f(x,y,s) corresponding to the difference with respect to the constant term. Therefore, the f(x,y,s) is expressed by the following Expression (8).

$$f(x, y, s) = f(x, y, t - T) + \delta f(x, y, s) \qquad (8)$$

Considering the properties of the reference signal, the following Expressions (9) and (10) are satisfied.

$$\int_{t-T}^t \cos(\omega \cdot s)ds = 0 \qquad (9)$$

$$\int_{t-T}^{t} \sin(\omega \cdot s)ds = 0 \qquad (1\,0)$$

Using the relationships of Expressions (9) and (10), Expressions (5) to (7) can be rewritten to expressions using a constant term and a variable term. As a result, the following Expressions (11) to (13) are obtained.

$$g_0(x,y,t) = Y(x,y,t-T) + \int_{t-T}^{t} \delta f(x,y,s)ds \qquad (1\,1)$$

$$\mathrm{Re}\, g_1(x,y,t) = \int_{t-T}^{t} \cos(\omega(s-t))f(x,y,s)ds \qquad (1\,2)$$

$$\mathrm{Im}\, g_1(x,y,t) = \int_{t-T}^{t} \sin(\omega(s-t))f(x,y,s)ds \qquad (1\,3)$$

In the event-based sensor, the current output by the photodiode of the time correlation image sensor is converted into an event signal of the event-based sensor, as represented by the following Expression (14).

$$\delta f(x,y,s) \rightarrow \Delta Y \sum_{i} \delta(s-s_i) \cdot p(x,y,s_i) \qquad (1\,4)$$

As a result, the Expressions (11) to (13) can be transformed into the following Expressions (15) to (17).

$$g_0(x,y,t) = Y(x,y,t-T) + \Delta Y \int_{t-T}^{t} \delta(s-s_i) \cdot p(s,y,s_i)ds \qquad (1\,5)$$

$$\mathrm{Re}\, g_1(x,y,t) = \Delta Y \int_{t-T}^{t} \cos(\omega(s-t)) \sum_{i} \delta(s-s_i) \cdot p(x,y,s_i)ds \qquad (1\,6)$$

$$\mathrm{Im}\, g_1(x,y,t) = \Delta Y \int_{t-T}^{t} \sin(\omega(s-t)) \sum_{i} \delta(s-s_i) \cdot p(x,y,s_i)ds \qquad (1\,7)$$

As indicated in Expressions (15) to (17), it is possible to output the time correlation signal by using the event signal generated during the period (cycle T) in which the signal is acquired.

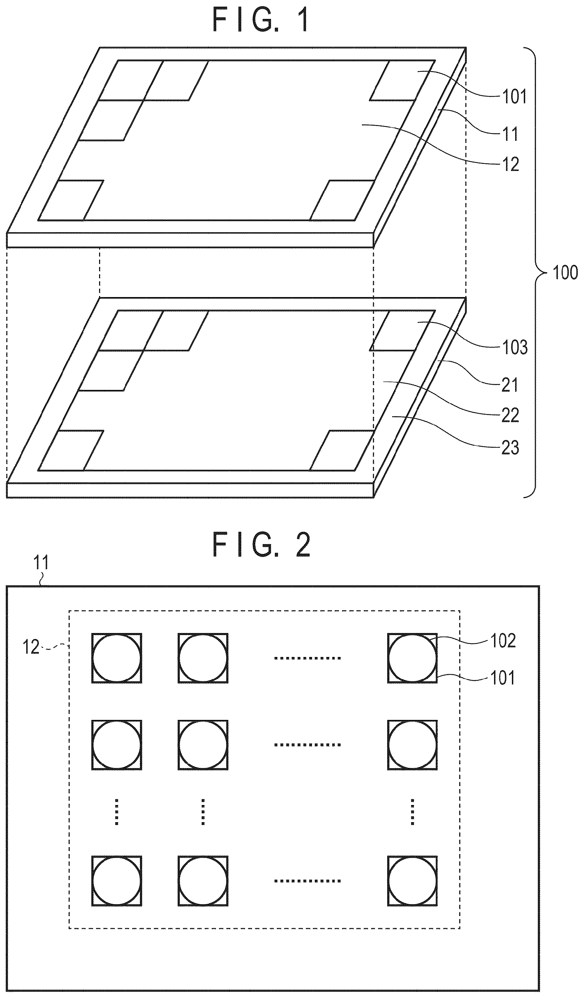

Next, a configuration of the photoelectric conversion device according to the present embodiment will be described. Fig. 1 is a schematic diagram illustrating an overall configuration of the photoelectric conversion device 100 according to the present embodiment. The photoelectric conversion device 100 includes a sensor substrate 11 (first substrate) and a circuit substrate 21 (second substrate) stacked. The sensor substrate 11 and the circuit substrate 21 are electrically connected to each other. The sensor substrate 11 has a pixel region 12 in which a plurality of pixel circuits 101 are arranged to form a plurality of rows and a plurality of columns. The circuit substrate 21 includes a first circuit region 22 in which a plurality of pixel signal processing units 103 are arranged to form a plurality of rows and a plurality of columns, and a second circuit region 23 arranged outside the first circuit region 22. The second circuit region 23 may include a circuit for controlling the plurality of pixel signal processing units 103. The sensor substrate 11 has a light incident surface for receiving incident light and a connection surface opposed to the light incident surface. The sensor substrate 11 is connected to the circuit substrate 21 on the connection surface side. That is, the photoelectric conversion device 100 is a so-called backside illumination type.

In this specification, the term "plan view" refers to a view from a direction perpendicular to a surface opposite to the light incident surface. The cross section indicates a surface in a direction perpendicular to a surface opposite to the light incident surface of the sensor substrate 11. Although the light incident surface may be a rough surface when viewed microscopically, in this case, a plan view is defined with reference to the light incident surface when viewed macroscopically.

In the following description, the sensor substrate 11 and the circuit substrate 21 are diced chips, but the sensor substrate 11 and the circuit substrate 21 are not limited to chips. For example, the sensor substrate 11 and the circuit substrate 21 may be wafers. When the sensor substrate 11 and the circuit substrate 21 are diced chips, the photoelectric conversion device 100 may be manufactured by being diced after being stacked in a wafer state, or may be manufactured by being stacked after being diced.

Fig. 2 is a schematic block diagram illustrating an arrangement example of the sensor substrate 11. In the pixel region 12, a plurality of pixel circuits 101 are arranged to form a plurality of rows and a plurality of columns. Each of the plurality of pixel circuits 101 includes a photoelectric conversion unit 102 including an avalanche photodiode (hereinafter referred to as APD) as a photoelectric conversion element in the substrate.

Of the charge pairs generated in the APD, the conductivity type corresponding to the charge used as the signal charge is referred to as a first conductivity type. The first conductivity type refers to a conductivity type in which a charge having the same polarity as the signal charge is a majority carrier. Further, a conductivity type opposite to the first conductivity type, that is, a conductivity type in which a majority carrier is a charge having a polarity different from that of a signal charge is referred to as a second conductivity type. In the APD described below, the anode of the APD is set to a fixed potential, and a signal is extracted from the cathode of the APD. Accordingly, the semiconductor region of the first conductivity type is an N-type semiconductor region, and the semiconductor region of the second conductivity type is a P-type semiconductor region. Note that the cathode of the APD may have a fixed potential and a signal may be extracted from the anode of the APD. In this case, the semiconductor region of the first conductivity type is the P-type semiconductor region, and the semiconductor region of the second conductivity type is then N-type semiconductor region. Although the case where one node of the APD is set to a fixed potential is described below, potentials of both nodes may be varied.

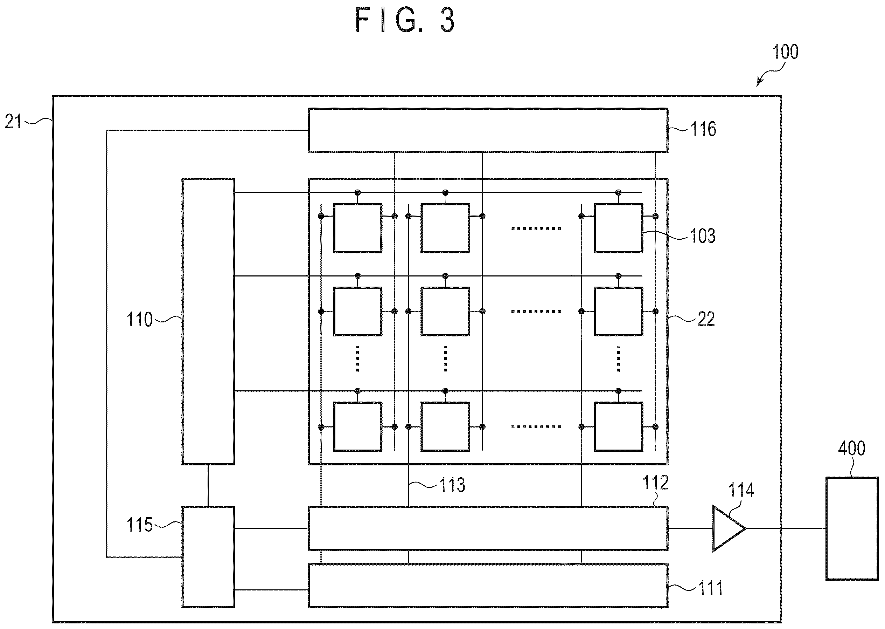

Fig. 3 is a schematic block diagram illustrating a configuration example of the circuit substrate 21. The circuit substrate 21 has the first circuit region 22 in which a plurality of pixel signal processing units 103 are arranged to form a plurality of rows and a plurality of columns.

The circuit substrate 21 includes a vertical scanning circuit 110, a horizontal scanning circuit 111, a reading circuit 112, a pixel output signal line 113, an output circuit 114, a control signal generation unit 115, and a weight control unit 116. The plurality of photoelectric conversion units 102 illustrated in Fig. 2 and the plurality of pixel signal processing units 103 illustrated in Fig. 3 are electrically connected to each other via connection wirings provided for each pixel circuits 101.

The control signal generation unit 115 is a control circuit that generates control signals for driving the vertical scanning circuit 110, the horizontal scanning circuit 111, the reading circuit 112, and the weight control unit 116 and supplies the control signals to these units. As a result, the control signal generation unit 115 controls the driving timings and the like of each unit.

The vertical scanning circuit 110 supplies control signals to each of the plurality of pixel signal processing units 103 based on the control signal supplied from the control signal generation unit 115. The vertical scanning circuit 110 supplies control signals for each row to the pixel signal processing unit 103 via a driving line provided for each row of the first circuit region 22. As will be described later, a plurality of driving lines may be provided for each row. A logic circuit such as a shift register or an address decoder can be used for the vertical scanning circuit 110. Thus, the vertical scanning circuit 110 selects a row to be output a signal from the pixel signal processing unit 103.

The signal output from the photoelectric conversion unit 102 of the pixel circuit 101 is processed by the pixel signal processing unit 103. The pixel signal processing unit 103 acquires and holds a digital signal based on a pulse output from the APD included in the photoelectric conversion unit 102.

The weight control unit 116 controls a weight coefficient (weight amount) given to the output signal from the APD in the pixel signal processing unit 103. A reference signal including information on the weight amount is supplied from the weight control unit 116 to each of the plurality of pixel signal processing units 103.

The horizontal scanning circuit 111 supplies control signals to the reading circuit 112 based on a control signal supplied from the control signal generation unit 115. The pixel signal processing unit 103 is connected to the reading circuit 112 via a pixel output signal line 113 provided for each column of the first circuit region 22. The pixel output signal line 113 in one column is shared by a plurality of pixel signal processing units 103 in the corresponding column. The pixel output signal line 113 includes a plurality of wirings, and has at least a function of outputting a digital signal from the pixel signal processing unit 103 to the reading circuit 112, and a function of supplying a control signal for selecting a column for outputting a signal to the pixel signal processing unit 103. The reading circuit 112 outputs a signal to the processing device 400 via the output circuit 114 based on the control signal supplied from the control signal generation unit 115.

The processing device 400 performs signal processing on a signal output from the photoelectric conversion device 100. The processing device 400 may perform processing related to time correlation imaging such as calculation of an optical flow using a signal output from the photoelectric conversion device 100. This processing may be based on, for example, Expressions (1) to (17) described above. The processing device 400 may be provided inside the photoelectric conversion device 100 or may be provided in equipment on which the photoelectric conversion device 100 is mounted.

The arrangement of the photoelectric conversion units 102 in the pixel region 12 may be one-dimensional. Further, the function of the pixel signal processing unit 103 does not necessarily have to be provided one by one in all the pixel circuits 101. For example, one pixel signal processing unit 103 may be shared by a plurality of pixel circuits 101. In this case, the pixel signal processing unit 103 sequentially processes the signals output from the photoelectric conversion units 102, thereby providing the function of signal processing to each pixel circuit 101.

As illustrated in Figs. 2 and 3, the first circuit region 22 having a plurality of pixel signal processing units 103 is arranged in a region overlapping the pixel region 12 in the plan view. In the plan view, the vertical scanning circuit 110, the horizontal scanning circuit 111, the reading circuit 112, the output circuit 114, the control signal generation unit 115, and the weight control unit 116 are arranged so as to overlap a region between an edge of the sensor substrate 11 and an edge of the pixel region 12. In other words, the sensor substrate 11 includes the pixel region 12 and a non-pixel region arranged around the pixel region 12. In the circuit substrate 21, the second circuit region 23 having the vertical scanning circuit 110, the horizontal scanning circuit 111, the reading circuit 112, the output circuit 114, the control signal generation unit 115, and the weight control unit 116 is arranged in a region overlapping with the non-pixel region in the plan view.

Note that the arrangement of the pixel output signal line 113, the arrangement of the reading circuit 112, and the arrangement of the output circuit 114 are not limited to those illustrated in Fig. 3. For example, the pixel output signal lines 113 may extend in the row direction, and may be shared by a plurality of pixel signal processing units 103 in corresponding rows. The reading circuit 112 may be provided so as to be connected to the pixel output signal line 113 of each row.

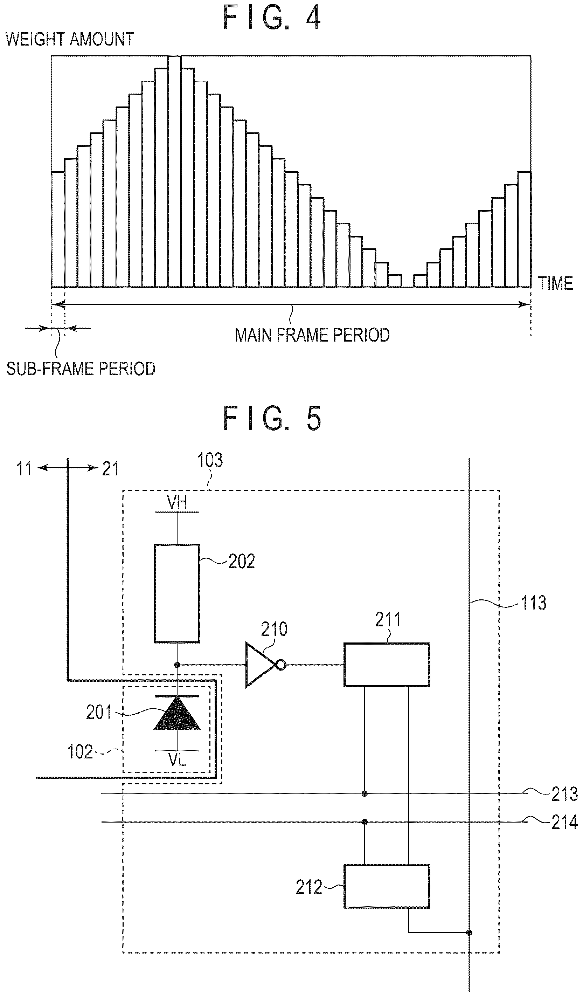

Fig. 4 is a diagram illustrating a relationship between a main frame period and sub-frame periods and a temporal change in a weight amount according to the first embodiment. In the graph illustrated in Fig. 4, the horizontal axis indicates time, and the vertical axis indicates the weight amount set by the weight control unit 116. As illustrated in Fig. 4, a main frame period (first period), which is an exposure period for generating one frame, is divided into a plurality of sub-frame periods (second periods). The weight control unit 116 sets the weight amount so that the weight amount changes every time the sub-frame period elapses. The weight amount may be set based on a periodic function in which the time is a variable and the main frame period is one cycle. In other words, the periodic function has a different phase for each sub-frame period. The periodic function used to set the weight amount may be a sine function. By performing weighting by the weight amount based on the sine function, a signal corresponding to Expression (17) can be generated. The periodic function used to set the weight amount may be a cosine function. By performing weighting by the weight amount based on the cosine function, a signal corresponding to Expression (16) can be generated. As described later, one sub-frame period may be further divided into a plurality of micro-frame periods (third periods).

Fig. 5 is a schematic block diagram illustrating a configuration example of one pixel of the photoelectric conversion unit 102 and the pixel signal processing unit 103 according to the present embodiment. Fig. 5 schematically illustrates a more specific configuration example including a connection relationship between the photoelectric conversion unit 102 arranged in the sensor substrate 11 and the pixel signal processing unit 103 arranged in the circuit substrate 21. In Fig. 5, driving lines between the vertical scanning circuit 110 and the pixel signal processing unit 103 in Fig. 3 are illustrated as driving lines 213 and 214.

The photoelectric conversion unit 102 includes an APD 201. The pixel signal processing unit 103 includes a quenching element 202, a waveform shaping unit 210, a counter circuit 211, and a selection circuit 212. The pixel signal processing unit 103 may include at least one of the waveform shaping unit 210, the counter circuit 211, and the selection circuit 212.

The APD 201 generates a charge pair corresponding to incident light by photoelectric conversion. A voltage VL (first voltage) is supplied to the anode of the APD 201. The cathode of the APD 201 is connected to a first terminal of the quenching element 202 and an input terminal of the waveform shaping unit 210. A voltage VH (second voltage) higher than the voltage VL supplied to the anode is supplied to the cathode of the APD 201. As a result, a reverse bias voltage that causes the APD 201 to perform the avalanche multiplication operation is supplied to the anode and the cathode of the APD 201. In the APD 201 to which the reverse bias voltage is supplied, when a charge is generated by the incident light, this charge causes avalanche multiplication, and an avalanche current is generated.

The operation modes in the case where a reverse bias voltage is supplied to the APD 201 include a Geiger mode and a linear mode. The Geiger mode is a mode in which a potential difference between the anode and the cathode is higher than a breakdown voltage, and the linear mode is a mode in which a potential difference between the anode and the cathode is near or lower than the breakdown voltage.

The APD operated in the Geiger mode is referred to as a single photon avalanche diode (SPAD). In this case, for example, the voltage VL (first voltage) is -30 V, and the voltage VH (second voltage) is 1 V. The APD 201 may operate in the linear mode or the Geiger mode. In the case of the SPAD, a potential difference becomes greater than that of the APD of the linear mode, and the effect of avalanche multiplication becomes significant, so that the SPAD may be used.

The quenching element 202 functions as a load circuit (quenching circuit) when a signal is multiplied by avalanche multiplication. The quenching element 202 suppresses the voltage supplied to the APD 201 and suppresses the avalanche multiplication (quenching operation). Further, the quenching element 202 returns the voltage supplied to the APD 201 to the voltage VH by passing a current corresponding to the voltage drop due to the quenching operation (recharge operation). The quenching element 202 may be, for example, a transistor.

The waveform shaping unit 210 shapes the potential change of the cathode of the APD 201 obtained at the time of photon detection, and outputs a pulse signal. For example, an inverter circuit is used as the waveform shaping unit 210.

Although Fig. 5 illustrates an example in which one inverter is used as the waveform shaping unit 210, the waveform shaping unit 210 may be a circuit in which a plurality of inverters are connected in series, or may be another circuit having a waveform shaping effect.

The counter circuit 211 counts the pulse signals output from the waveform shaping unit 210 and holds a digital signal indicating the count value. When a control signal is supplied from the vertical scanning circuit 110 through the driving line 213, the counter circuit 211 resets the signal held therein.

The selection circuit 212 is supplied with a control signal from the vertical scanning circuit 110 illustrated in Fig. 3 through the driving line 214 illustrated in Fig. 5. In response to this control signal, the selection circuit 212 switches between the electrical connection and the non-connection of the counter circuit 211 and the pixel output signal line 113. The selection circuit 212 includes, for example, a buffer circuit or the like for outputting a signal corresponding to a value held in the counter circuit 211.

In the example of Fig. 5, the selection circuit 212 switches between the electrical connection and the non-connection of the counter circuit 211 and the pixel output signal line 113; however, the method of controlling the signal output to the pixel output signal line 113 is not limited thereto. For example, a switch such as a transistor may be arranged at a node such as between the quenching element 202 and the APD 201 or between the photoelectric conversion unit 102 and the pixel signal processing unit 103, and the signal output to the pixel output signal line 113 may be controlled by switching the electrical connection and the non-connection. Alternatively, the signal output to the pixel output signal line 113 may be controlled by changing the value of the voltage VH or the voltage VL supplied to the photoelectric conversion unit 102 using a switch such as a transistor.

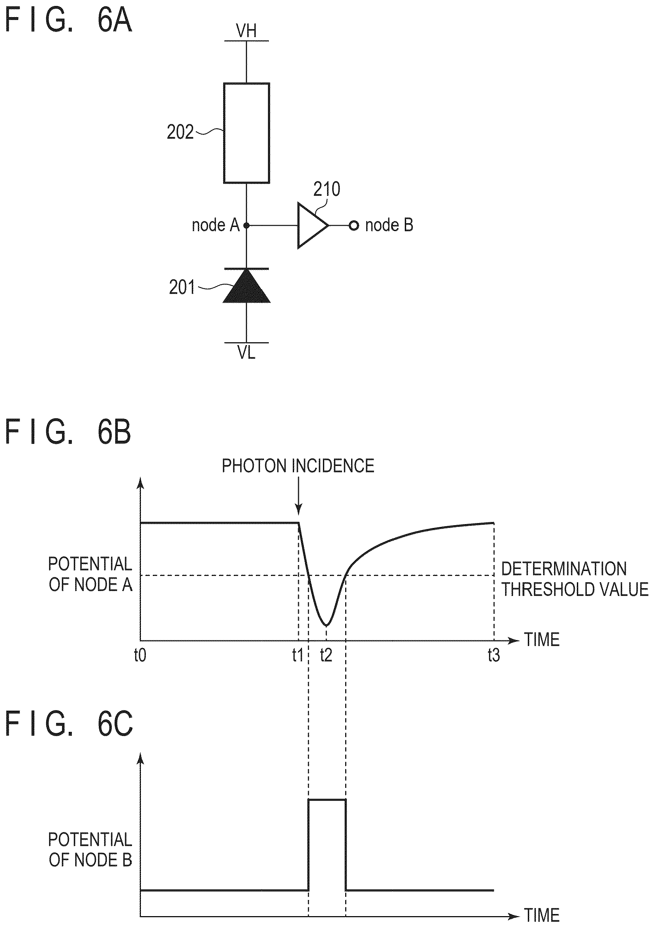

Figs. 6A, 6B, and 6C are diagrams illustrating an operation of the APD 201 according to the present embodiment. Fig. 6A is a diagram illustrating the APD 201, the quenching element 202, and the waveform shaping unit 210 in Fig. 5. As illustrated in Fig. 6A, the connection node of the APD 201, the quenching element 202, and the input terminal of the waveform shaping unit 210 is referred to as node A. Further, as illustrated in Fig. 6A, an output side of the waveform shaping unit 210 is referred to as node B.

Fig. 6B is a graph illustrating a temporal change in the potential of node A in Fig. 6A. Fig. 6C is a graph illustrating a temporal change in the potential of node B in Fig. 6A. During a period from time t0 to time t1, the voltage VH-VL is applied to the APD 201 in FIG. 6A. When a photon enters the APD 201 at the time t1, avalanche multiplication occurs in the APD 201. As a result, an avalanche current flows through the quenching element 202, and the potential of the node A drops. Thereafter, the amount of potential drop further increases, and the voltage applied to the APD 201 gradually decreases. Then, at time t2, the avalanche multiplication in the APD 201 stops. Thereby, the voltage level of node A does not drop below a certain constant value. Then, during a period from the time t2 to time t3, a current that compensates for the voltage drop flows from the node of the voltage VH to the node A, and the node A is settled to the original potential at the time t3.

In the above-described process, the potential of node B becomes the high level in a period in which the potential of node A is lower than a certain threshold value. In this way, the waveform of the drop of the potential of the node A caused by the incidence of the photon is shaped by the waveform shaping unit 210 and output as a pulse to the node B.

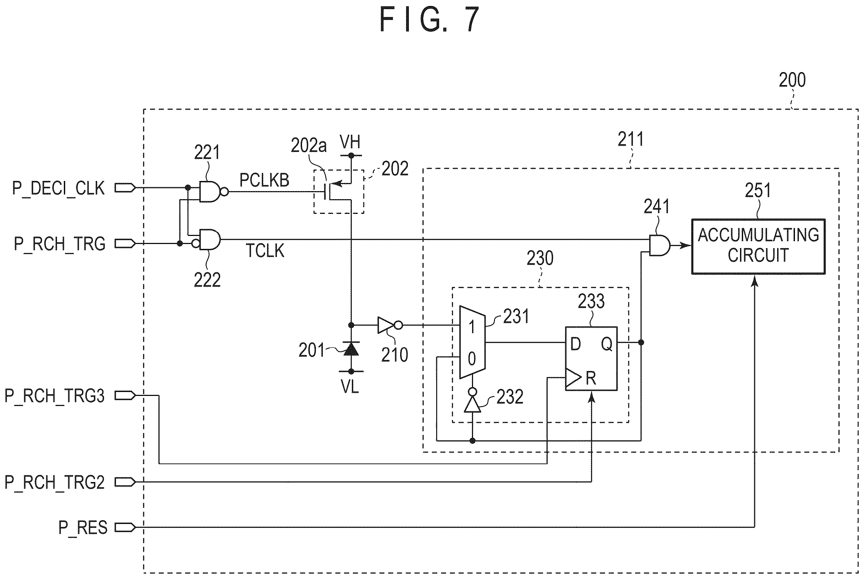

Fig. 7 is a diagram illustrating a configuration of a pixel according to the present embodiment. Fig. 7 illustrates the photoelectric conversion unit 102 and the pixel signal processing unit 103 in Fig. 5 in more detail. Hereinafter, an element obtained by combining the photoelectric conversion unit 102 and the pixel signal processing unit 103 may be referred to as a pixel 200. In Fig. 7, elements having the same functions as those illustrated in Fig. 5 are denoted by the same reference numerals as those in Fig. 5, and descriptions of these elements may be omitted or simplified.

The pixel 200 includes the APD 201, the quenching element 202, the waveform shaping unit 210, the counter circuit 211, a NAND circuit 221, and a logic circuit 222. The quenching element 202 has a P-type MOS transistor 202a. The counter circuit 211 includes an output holding circuit 230, an AND circuit 241 (first logic circuit), and an accumulating circuit 251 (first accumulating circuit). The output holding circuit 230 is a circuit that holds a light reception signal based on the output of the APD 201, and includes a selector circuit 231, a NOT circuit 232, and a flip-flop circuit 233.

A signal P_DECI_CLK is input to the pixel 200 from the weight control unit 116. Signals P_RCH_TRG, P_RCH_TRG2, P_RCH_TRG3, and P_RES are input to the pixel 200 from the vertical scanning circuit 110.

The signal P_DECI_CLK is, for example, a pulse signal having a frequency of 1 MHz to 200 MHz, and indicates a weight amount (first weight amount) set by the weight control unit 116. As described above, the weight amount is determined by a periodic function in which the main frame period is one cycle. The periodic function is, for example, the sine function or the cosine function. The weight control unit 116 is generated by thinning out a part of pulses from a clock signal input to the weight control unit 116. The number of pulses in one main frame period can be appropriately set according to the number of bits of the counter circuit 211. When the counter circuit 211 counts with 11 bits, the number of pulses in one main frame period is less than 2048.

The signal P_DECI_CLK is input to a first input terminal of the NAND circuit 221, and the signal P_RCH_TRG is input to a second input terminal of the NAND circuit 221. The signal P_RCH_TRG indicates the start of a sub-frame period. The signal P_RCH_TRG becomes the high level at the start of the sub-frame period, and then becomes the low level. Then, the signal P_RCH_TRG is maintained at the low level until the end of the sub-frame. The NAND circuit 221 outputs a signal obtained by inverting the logical product of the signal P_DECI_CLK and the signal P_RCH_TRG as a signal PCLKB. An output terminal of the NAND circuit 221 is connected to a gate of the MOS transistor 202a. The voltage VH is supplied to a source of the MOS transistor 202a. A drain of the MOS transistor 202a is connected to the cathode of the APD 201 and the input terminal of the waveform shaping unit 210.

The signal PCLKB controls the timing of the recharge operation in the APD 201. When both of the signals P_DECI_CLK and P_RCH_TRG become the high level, the signal PCLKB becomes the low level. At this time, the MOS transistor 202a is turned on, and the recharge operation is performed in the APD 201. The recharge operation is performed once in one sub-frame period.

The output terminal of the waveform shaping unit 210 is connected to a first input terminal of the selector circuit 231. An output terminal of the selector circuit 231 is connected to an input terminal D of the flip-flop circuit 233. The signal P_RCH_TRG2 is input to a reset terminal R of the flip-flop circuit 233. The signal P_RCH_TRG2 controls reset of a signal held in the flip-flop circuit 233. The signal P_RCH_TRG3 is input to a clock input terminal of the flip-flop circuit 233. The signal P_RCH_TRG3 controls the holding timing of a signal in the flip-flop circuit 233. An output terminal Q of the flip-flop circuit 233 is connected to a second input terminal of the selector circuit 231, an input terminal of the NOT circuit 232, and a second input terminal of the AND circuit 241. An output terminal of the NOT circuit 232 is connected to a control terminal of the selector circuit 231.

When the output signal of the flip-flop circuit 233 is at the low level, the selector circuit 231 selects and outputs the signal input to the first input terminal. That is, the output signal of the waveform shaping unit 210 is input to the input terminal D of the flip-flop circuit 233. When the output signal of the flip-flop circuit 233 is at the high level, the selector circuit 231 selects and outputs the signal input to the second input terminal. That is, the output signal of the flip-flop circuit 233 is fed back and input to the input terminal D of the flip-flop circuit 233.

The logic circuit 222 outputs a logical product of an input signal of a first input terminal and an inverted value of an input signal of a second input terminal. The signal P_DECI_CLK is input to the first input terminal of the logic circuit 222, and the signal P_RCH_TRG is input to the second input terminal of the logic circuit 222. The logic circuit 222 outputs the logical product of the signal P_DECI_CLK and the inverted value of the signal P_RCH_TRG as a signal TCLK (first reference signal). An output terminal of the logic circuit 222 is connected to a first input terminal of the AND circuit 241. That is, the signal TCLK is input to the first input terminal of the AND circuit 241.

The AND circuit 241 outputs the logical product of the signal TCLK and the output signal of the flip-flop circuit 233 to the accumulating circuit 251. The accumulating circuit 251 counts the number of pulses by accumulating the pulses of the input signal. The accumulating circuit 251 holds the count value obtained thereby. In addition, the signal P_RES is input to the accumulating circuit 251. The signal P_RES becomes the high level at the start of one main frame. As a result, the count value held in the accumulating circuit 251 is reset.

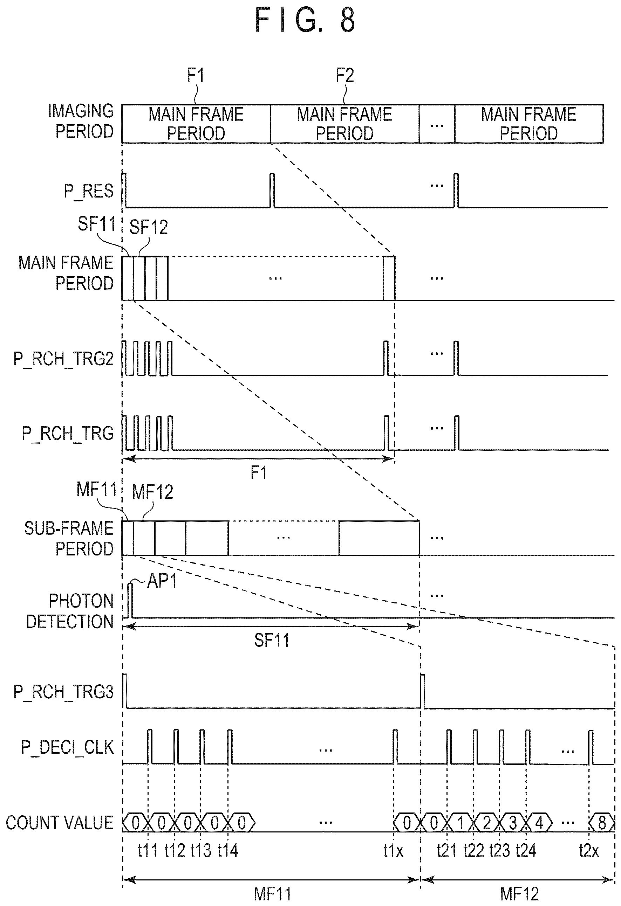

A method of driving the pixel 200 will be described with reference to Figs. 8 to 10. Fig. 8 is a timing chart illustrating a driving method of the pixel 200 according to the present embodiment. Fig. 8 schematically illustrates configurations of the imaging period, the main frame periods, and the sub-frame periods, and the timings of each signal, the photon detection timing, and the transition of the count value.

The imaging period is an operation period of the photoelectric conversion device 100, and imaging of the main frame is repeatedly performed within the imaging period. The imaging period includes a plurality of main frame periods F1, F2,.... Each main frame period is one exposure period, and imaging of one frame is performed for each main frame period. The signal P_RES becomes the high level at the start time of each main frame period, and then becomes the low level.

Each main frame period is divided into a plurality of sub-frame periods. The "main frame period" in Fig. 8 indicates that the first main frame period F1 is divided into a plurality of sub-frame periods SF11, SF12,.... The signal P_RCH_TRG and the signal P_RCH_TRG2 become the high level at the start time of each sub-frame period, and then become the low level. The times at which the signals P_RES, P_RCH_TRG, and P_RCH_TRG2 become the low level may be appropriately set within a range that does not affect the operation such as the counting of the signals.

Each sub-frame period is divided into a plurality of micro-frame periods. The "sub-frame period" in Fig. 8 indicates that the first sub-frame period SF11 is divided into a plurality of micro-frame periods MF11, MF12,.... In the "sub-frame period" of Fig. 8, the lengths of the plurality of micro-frame periods MF11, MF12,... are different from each other, but it is not essential that the lengths of the plurality of micro-frame periods MF11, MF12,... be different from each other. The lengths of the plurality of micro-frame periods MF11, MF12,... may be the same. The same applies to the micro-frame periods of the other timing charts.

A pulse AP1 illustrated in the "photon detection" in Fig. 8 indicates a timing at which a photon is detected in the sub-frame period SF11. In the example of Fig. 8, a photon is detected in the micro-frame period MF11.

The signal P_RCH_TRG3 becomes the high level at the start time of each micro-frame period, and then becomes the low level. Note that the time at which the signal P_RCH_TRG3 becomes the low level can be appropriately set within a range in which the operation such as the count of the signal is not affected.

The "P_DECI_CLK" in Fig. 8 indicates a plurality of pulses of the signal P_DECI_CLK in the micro-frame periods MF11 and MF12. In the micro-frame period MF11, the signal P_DECI_CLK becomes the high level at times t11, t12, t13,

9

t14,... t1x, and then becomes the low level. In the micro-frame period MF12, the signal P_DECI_CLK becomes the high level at times t21, t22, t23, t24,... t2x, and then becomes the low level. The number of pulses input in one micro-frame period or the density of pulses is associated with the weight amount. The weight amount changes every time one sub-frame period elapses.

The "count value" in Fig. 8 indicates a temporal change in the count value (first count value) held in the accumulating circuit 251 in the micro-frame periods MF11 and MF12. The pulse generated by the photon detection is held in the flip-flop circuit 233 when the high-level signal P_RCH_TRG3 is input to the clock input terminal of the flip-flop circuit 233. The timing at which the signal P_RCH_TRG3 becomes the high level is the start time of the next micro-frame period MF12 after the micro-frame period MF11 in which the photon is detected. Therefore, the increase of the count value due to the photon detection is started from the micro-frame period MF12 subsequent to the micro-frame period MF11 in which the photon is detected. That is, the count value does not change in the micro-frame period MF11 in which the photon is detected. Then, in the next micro-frame period MF12, the count value increases by one each time the signal P_DECI_CLK becomes the high level at the times t21, t22, t23, t24,... t2x.

Fig. 8 illustrates an example in which the weight amount is set by a periodic function including a sine function sin(t). Since the weight amount is expressed by the number of pulse signals, the function of the weight amount is set so that the range of the weight amount is non-negative. Here, it is assumed that the function of the weight amount is (sin(t)+1), and the range of the weight amount is zero to two. Further, it is assumed that the bit width of the digital value indicating (sin(t)+1) is four bits. That is, the number of pulses of the signal P_DECI_CLK in one micro-frame period is zero to fifteen. In this case, assuming that the phase of the sine function is zero in the first sub-frame period SF11, the weight amount is one according to (sin(0)+1). Since the number of pulses corresponding to this weight amount is eight, the count number at the time t2x of the micro-frame period MF12 is eight.

The count value continues to increase in the micro-frame periods after the micro-frame period MF12. When the signal P_RCH_TRG2 becomes the high level at the start time of the next sub-frame period SF12, the flip-flop circuit 233 is reset and the increase of the count value is stopped. In this way, the accumulating circuit 251 counts the pulses based on the signal P_DECI_CLK from the micro-frame period subsequent to the micro-frame period in which the photon is detected to the end of the sub-frame period in one sub-frame period.

In the case where a photon is detected in one sub-frame period, the photon is detected in a micro-frame period closer to the head of the sub-frame period as the illuminance increases. In this case, since the period in which the pulse count based on the signal P_DECI_CLK is continued is long, the count value becomes large. On the other hand, as the illuminance is lower, the photon is detected in a micro-frame period closer to the end of the sub-frame period. In this case, since the period in which the pulse count based on the signal P_DECI_CLK is continued is short, the count value becomes small. Therefore, a count value having a magnitude corresponding to the illuminance can be acquired.

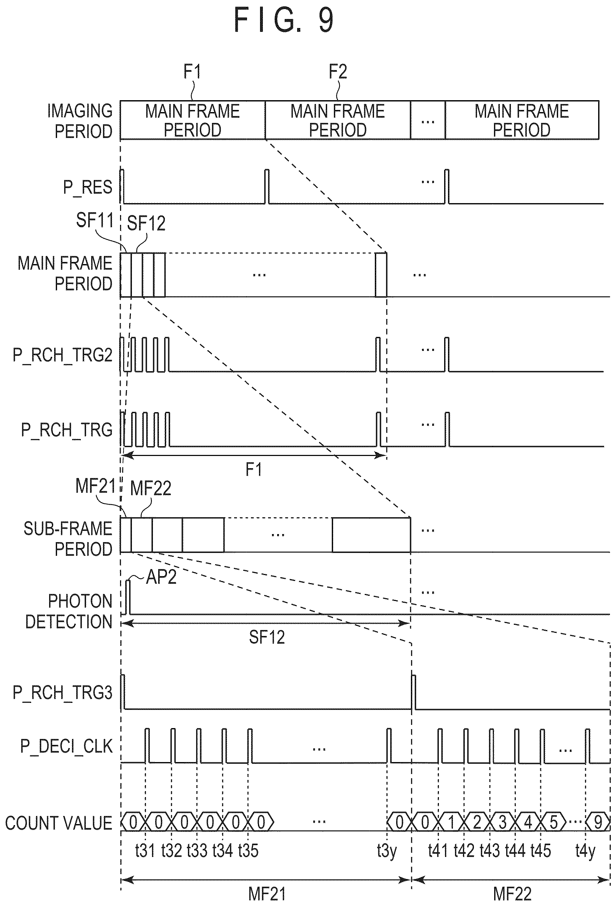

Fig. 9 is a timing chart illustrating a driving method of the pixel 200 according to the present embodiment. Fig. 8 mainly illustrates the operation in the sub-frame period SF11. On the other hand, Fig. 9 mainly illustrates the operation of the sub-frame period SF12 subsequent to the sub-frame period SF11. Descriptions of operations common to those in Fig. 8 will be omitted or simplified.

The "sub-frame period" in Fig. 9 indicates that the sub-frame period SF12 subsequent to the sub-frame period SF11 is divided into a plurality of micro-frame periods MF21, MF22,.... A pulse AP2 illustrated in the "photon detection" in Fig. 9 indicates a timing at which a photon is detected in the sub-frame period SF12. In the example of Fig. 9, a photon is detected in the micro-frame period MF21. Therefore, the count value starts to increase from the next micro-frame period MF22.

The "P_DECI_CLK" in Fig. 9 indicates a plurality of pulses of the signal P_DECI_CLK in the micro-frame periods MF21 and MF22. In the micro-frame period MF21, the signal P_DECI_CLK becomes the high level at times t31, t32, t33, t34, t35,... t3y, and then becomes the low level. In the micro-frame period MF22, the signal P_DECI_CLK becomes the high level at times t41, t42, t43, t44,... t4y, and then becomes the low level.

In the micro-frame period MF21 in which a photon is detected, the count value does not change. Then, in the next micro-frame period MF22, the count value increases by one each time the signal P_DECI_CLK becomes the high level at the times t41, t42, t43, t44, t45,... t4y.

The phase of the periodic function of the weight amount in the sub-frame period SF12 is different from the phase of the periodic function of the weight amount in the sub-frame period SF11. Therefore, the number of pulses of the signal P_DECI_CLK in the micro-frame periods MF21 and MF22 illustrated in Fig. 9 is different from the number of pulses of the signal P_DECI_CLK in the micro-frame periods MF11 and MF12 illustrated in Fig. 8.

For example, as in Fig. 8, it is assumed that the function of the weight amount is (sin(t)+1), and the number of sub-frames is 50. In this case, the phase of the sine function in the sub-frame period SF12 is $2\pi/50$. The weight amount is about 1.115 according to (sin($2\pi/50$)+1). Since the number of pulses corresponding to this weight amount is nine, the count number at the time t4y of the micro-frame period MF22 is nine.

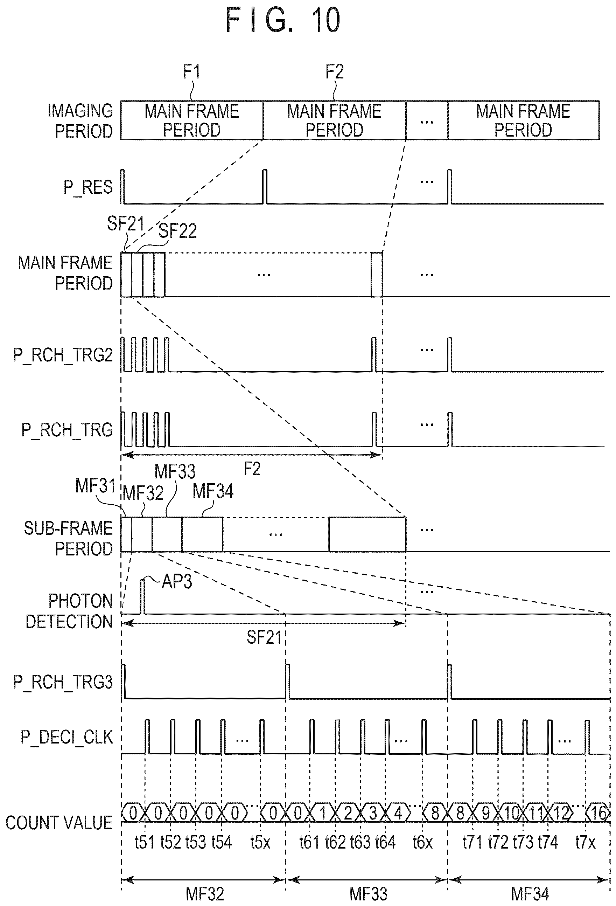

Fig. 10 is a timing chart illustrating a driving method of the pixel 200 according to the present embodiment. Figs. 8 and 9 mainly illustrate the operation in the main frame period F1. On the other hand, Fig. 10 mainly illustrates the operation in the main frame period F2 subsequent to the main frame period F1. Descriptions of operations common to those in Fig. 8 or 9 will be omitted or simplified.

The "main frame period" in Fig. 10 indicates that the main frame period F2 subsequent to the main frame period F1 is divided into a plurality of sub-frame periods SF21, SF22,.... The "sub-frame period" in Fig. 10 indicates that the first sub-frame period SF21 of the main frame period F2 is divided into a plurality of micro-frame periods MF31, MF32, MF33, MF34,....

A pulse AP3 illustrated in the "photon detection" in Fig. 10 indicates a timing at which a photon is detected in the sub-frame period SF21. In the example of Fig. 10, a photon is detected in the micro-frame period MF32. Therefore, the count value starts to increase from the next micro-frame period MF33. In addition, the count value continues to increase in the next micro-frame period MF34.

The "P_DECI_CLK" in Fig. 10 indicates a plurality of pulses of the signal P_DECI_CLK in the micro-frame periods MF32, MF33, and MF34. In the micro-frame period MF32, the signal P_DECI_CLK becomes the high level at times t51, t52, t53, t54,... t5x, and then becomes the low level. In the micro-frame period MF33, the signal P_DECI_CLK becomes the high level at times t61, t62, t63, t64,... t6x, and then becomes the low level. In the micro-frame period MF34, the signal P_DECI_CLK becomes the high level at times t71, t72, t73, t74,... t7x, and then becomes the low level.

In the micro-frame period MF32 in which a photon is detected, the count value does not change. Then, in the next micro-frame period MF33, the count value increases by one each time the signal P_DECI_CLK becomes the high level at the times t61, t62, t63, t64,... t6x. Further, also in the next micro-frame period MF34, the count value increases by one each time the signal P_DECI_CLK becomes the high level at the times t71, t72, t73, t74,... t7x.

Similarly to Fig. 8, it is assumed that the function of the weight amount is (sin(t)+1), and the phase of the sine function in the first sub-frame period SF21 is zero. The weight amount is one according to (sin(0)+1). Since the number of pulses corresponding to this weight amount is eight, the count number at the time t6x of the micro-frame period MF33 is eight. In addition, the count value at the time t7x of the next micro-frame period MF34 is 16.

As described above, in the present embodiment, the count value corresponding to the micro-frame in which the photon is detected in the sub-frame period is generated. In general, as the amount of incident light increases, the photon is detected at an earlier timing, and thus the generated count value has a value corresponding to the amount of incident light. Further, in the present embodiment, since the light reception signal held in the output holding circuit 230 is reset for each sub-frame period and photon detection is performed for each sub-frame period, saturation is less likely to occur. Therefore, in the present embodiment, it is possible to cope with various amounts of light. Therefore, according to the present embodiment, a photoelectric conversion device capable of performing signal acquisition under various illuminances is provided.

Further, in the photoelectric conversion device of the present embodiment, weighting based on a periodic function such as a trigonometric function may be performed on the output signal. Therefore, the photoelectric conversion device of the present embodiment is applicable to acquisition of a signal for time correlation imaging such as calculation of an optical flow.

In the description of the operation of the pixel 200, specific examples regarding weighting such as the expression of the function of the weight amount, the bit width of the weight amount, and the value of the weight amount are illustrated in some cases, but these examples are not particularly limited and may be appropriately changed. The number of divisions of the sub-frame periods and the micro-frame periods can also be set as appropriate.

Second Embodiment

In the present embodiment, a modification of the circuit of the pixel 200 of the first embodiment will be described. In the present embodiment, description of elements common to those of the first embodiment may be omitted or simplified.

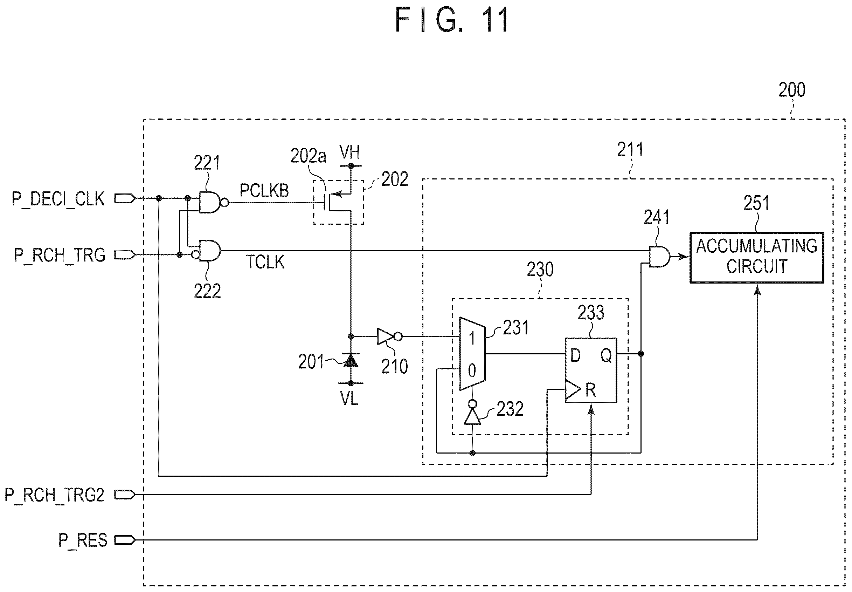

Fig. 11 is a diagram illustrating a configuration of the pixel 200 according to the present embodiment. Fig. 11 is different from Fig. 7 in that the signal P_DECI_CLK is input to the clock input terminal of the flip-flop circuit 233. The description of other circuit configurations is omitted because it is similar to that of Fig. 7.

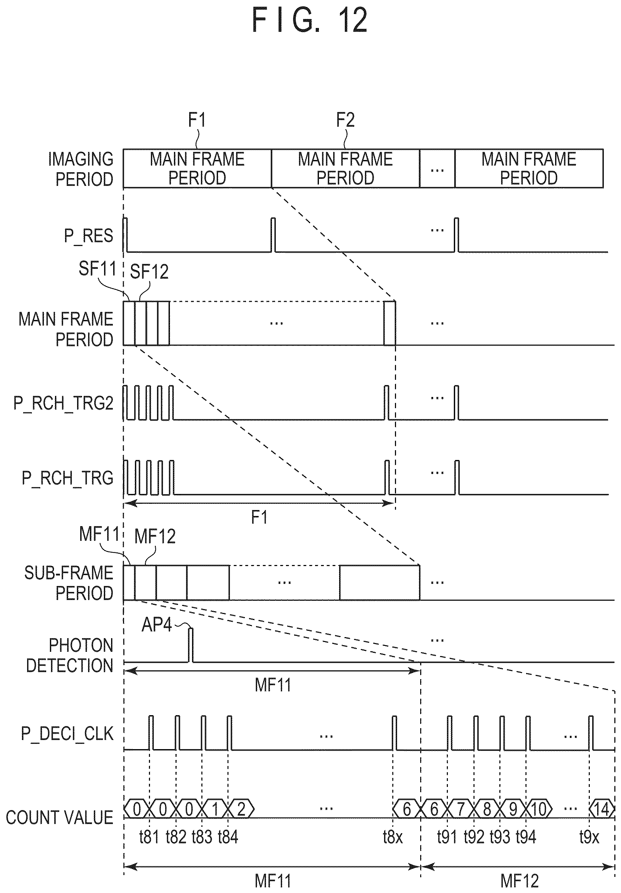

Fig. 12 is a timing chart illustrating a driving method of the pixel 200 according to the present embodiment. The main frame periods, the sub-frame periods, and the micro-frame periods are the same as those in Fig. 8.

The "P_DECI_CLK" in Fig. 12 indicates a plurality of pulses of the signal P_DECI_CLK in the micro-frame periods MF11 and MF12. In the micro-frame period MF11, the signal P_DECI_CLK becomes the high level at times t81, t82, t83, t84,... t8x, and then becomes the low level. In the micro-frame period MF12, the signal P_DECI_CLK becomes the high level at times t91, t92, t93, t94,... t9x, and then becomes the low level.

A pulse AP4 illustrated in the "photon detection" in Fig. 12 indicates a timing at which a photon is detected. In the example of Fig. 12, a photon is detected between the time t82 and the time t83 in the micro-frame period MF11.

The "count value" in Fig. 12 indicates a temporal change in the count value held in the accumulating circuit 251 in the micro-frame periods MF11 and MF12. The pulse generated by the photon detection is held in the flip-flop circuit 233 when the high-level signal P_DECI_CLK is input to the clock input terminal of the flip-flop circuit 233. Therefore, after the photon is detected, an increase in the count value due to the detection of the photon starts from the time t83 at which the high-level signal P_DECI_CLK is input first. That is, in the micro-frame period MF11 in which the photon is detected, the count value increases by one each time the signal P_DECI_CLK becomes the high level at the times t83, t84,... t8x. Thus, the count number at the time t8x of the micro-frame period MF11 is six. Further, in the next micro-frame period MF12, the count value increases by one each time the signal P_DECI_CLK becomes the high level at the times t91, t92, t93, t94,... t9x. Thus, the count number at the time t9x of the micro-frame period MF12 is 14.

In the first embodiment, the flip-flop circuit 233 holds the pulse due to detection of a photon in the micro-frame period subsequent to the micro-frame period in which the photon is detected. Therefore, in the first embodiment, the count value starts to increase from the micro-frame period subsequent to the micro-frame period in which the photon is detected. On the other hand, in the present embodiment, the flip-flop circuit 233 holds the pulse due to detection of the photon when the next pulse of the signal P_DECI_CLK is input after the photon is detected in a certain micro-frame period. Thus, in the present embodiment, an increase in count value may begin within a micro-frame period in which a photon is detected. As a result, in the present embodiment, in addition to the same effects as those of the first embodiment, the illuminance can be more appropriately reflected on the count value as compared with the first embodiment.

Third Embodiment

In the present embodiment, a modification of the circuit of the pixel 200 of the first embodiment will be described. In the present embodiment, description of elements common to those of the first embodiment may be omitted or simplified.

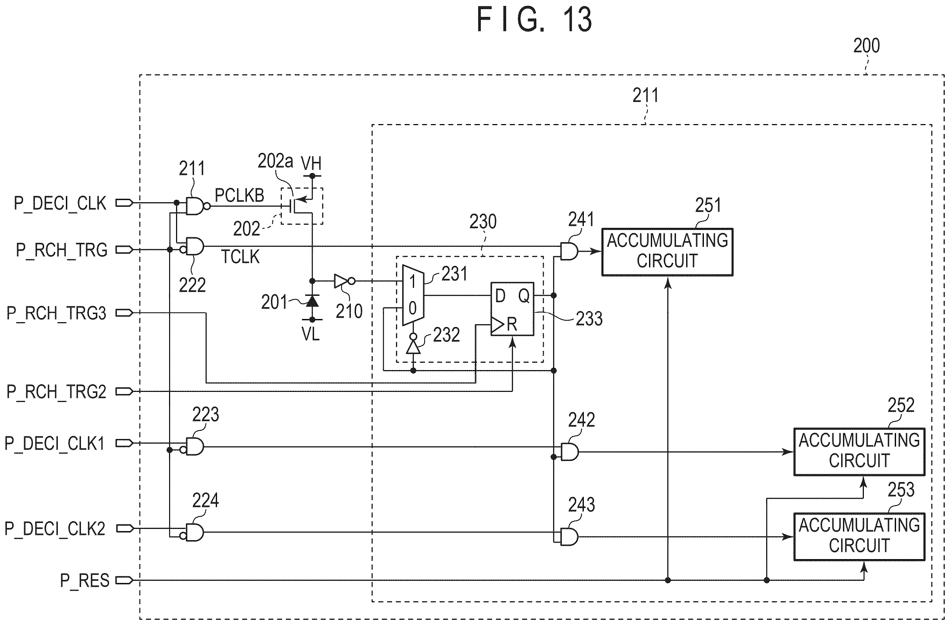

Fig. 13 is a diagram illustrating a configuration of the pixel 200 according to the present embodiment. Fig. 13 is different from Fig. 7 in that a plurality of signals having different weight amounts can be generated. The pixel 200 further includes logic circuits 223 and 224 in addition to the elements illustrated in Fig. 7. Further, the counter circuit 211 further includes AND circuits 242 and 243 and accumulating circuits 252 and 253. Further, signals P_DECI_CLK1 and P_DECI_CLK2 are further input to the pixel 200 from the weight control unit 116.

The signals P_DECI_CLK1 and P_DECI_CLK2 are pulse signals similar to the signal P_DECI_CLK. However, the signals P_DECI CLK, P_DECI_CLK1, and P_DECI_CLK2 may be signals indicating different weight amounts.

Each of the logic circuits 223 and 224 outputs a logical product of an input signal of a first input terminal and an inverted value of an input signal of a second input terminal. The signal P_DECI_CLK1 (second reference signal) indicating a weight amount (second weight amount) different from that of the signal P_DECI_CLK is input to the first input terminal of the logic circuit 223, and the signal P_RCH_TRG is input to the second input terminal of the logic circuit 223. The logic circuit 223 outputs a logical product of the signal P_DECI_CLK1 and an inverted value of the signal P_RCH_TRG to a first input terminal of the AND circuit 242 (second logic circuit). The signal P_DECI_CLK2 indicating a weight amount different from those of the signals P_DECI_CLK and P_DECI_CLK1 is input to the first input terminal of the logic circuit 224, and the signal P_RCH_TRG is input to the second input terminal of the logic circuit 224. The logic circuit 224 outputs a logical product of the signal P_DECI_CLK2 and an inverted value of the signal P_RCH_TRG to a first input terminal of the AND circuit 243. The output signal of the flip-flop circuit 233 is input to a second input terminal of the AND circuit 242 and a second input terminal of the AND circuit 243.

The AND circuit 241 outputs the logical product of the output signal of the logic circuit 222 and the output signal of the flip-flop circuit 233 to the accumulating circuit 251. The AND circuit 242 outputs a logical product of the output signal of the logic circuit 223 and the output signal of the flip-flop circuit 233 to the accumulating circuit 252 (second accumulating circuit). The AND circuit 243 outputs a logical product of the output signal of the logic circuit 224 and the output signal of the flip-flop circuit 233 to the accumulating circuit 253. Each of the accumulating circuits 251, 252, and 253 counts the number of pulses by accumulating pulses of the input signal. The accumulating circuits 251, 252, and 253 hold a first count value, a second count value, and a third count value, respectively. The first count value, the second count value, and the third count value may be different from each other due to the difference in the weight amount. Further, the signal P_RES is input to the accumulating circuits 251, 252, and 253. The signal P_RES becomes the high level at the start of one main frame. As a result, the count values held in the accumulating circuits 251, 252, and 253 are reset.

As described above, in the present embodiment, in addition to the same effects as those of the first embodiment, three signals weighted based on the three types of signals P_DECI_CLK, P_DECI_CLK1, and P_DECI_CLK2 can be acquired in parallel. For example, the three types of signals P_DECI CLK, P_DECI_CLK1, and P_DECI_CLK2 may be signals indicating a weight amount based on a sine function, a weight amount based on a cosine function, and a weight amount that does not change for each sub-frame period. In this case, a correlation image by weighting based on the sine function, a correlation image by weighting based on the cosine function, and a normal image can be acquired in parallel, and signals applicable to time correlation imaging such as calculation of an optical flow can be acquired more efficiently.

Fourth Embodiment

In the present embodiment, a configuration example of the photoelectric conversion device 100 that realizes signal acquisition under various illuminances by a circuit configuration and an operation method different from those of the first embodiment to the third embodiment will be described. In the present embodiment, description of elements common to the first embodiment to the third embodiment may be omitted or simplified. In the present embodiment, similarly to the third embodiment, a case where weighting is performed based on three types of signals P_DECI CLK, P_DECI_CLK1, and P_DECI_CLK2 is exemplified, but the number of types of pulse signals for weighting is not limited thereto.

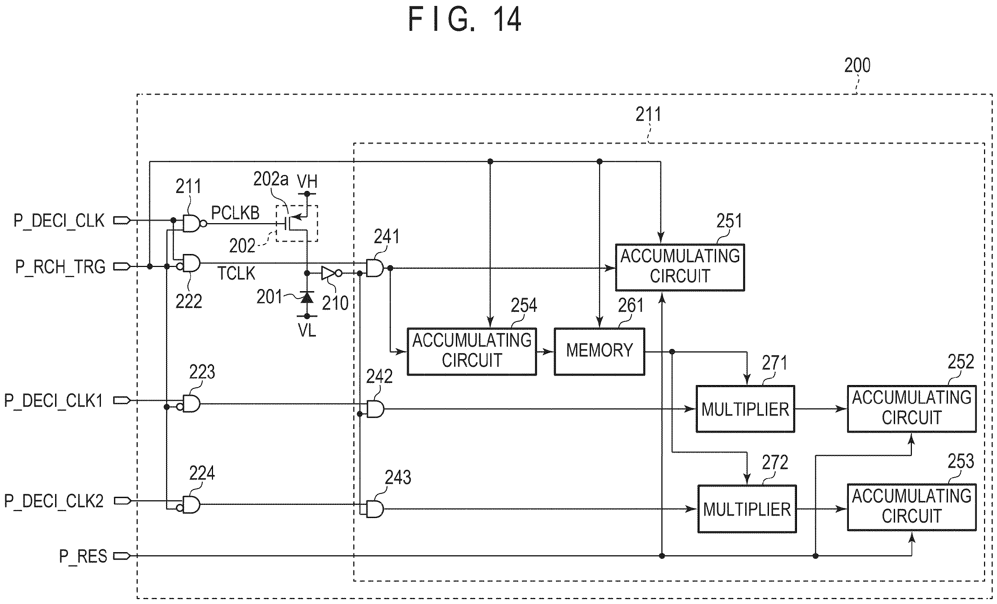

Fig. 14 is a diagram illustrating a configuration of the pixel 200 according to the present embodiment. Fig. 14 is different from Fig. 13 in that the pixel 200 includes a memory that holds a count value in one sub-frame period and multipliers that multiply the count value. The counter circuit 211 includes AND circuits 241, 242, and 243, accumulating circuits 251, 252, 253 and 254, a memory 261, and multipliers 271 and 272. Further, unlike Fig. 13, in the present embodiment, the output holding circuit 230 is not provided.

The signal TCLK is input to the first input terminal of the AND circuit 241 from the logic circuit 222, and the output signal of the waveform shaping unit 210 is input to the second input terminal of the AND circuit 241. The AND circuit 241 outputs a logical product of the signal TCLK and the output signal (light reception signal) of the waveform shaping unit 210 to the accumulating circuits 251 and 254.

The accumulating circuits 251 and 254 count the number of pulses by accumulating pulses of input signals. The accumulating circuits 251 and 254 hold the count values obtained thereby. The count value output from the accumulating circuit 254 is input to the memory 261. The signal P_RCH_TRG is input to the accumulating circuits 251 and 254 and the memory 261. The memory 261 holds the count value output from the accumulating circuit 254 at the start of one sub-frame period based on the signal P_RCH_TRG. After the count value is held in the memory 261, the accumulating circuit 254 resets the count value held therein based on the signal P_RCH_TRG. That is, the accumulating circuit 254 resets the count value every sub-frame period. The memory 261 holds the count value (light amount value) obtained in the previous sub-frame period in each sub-frame period, and updates the count value held therein at the timing when the next sub-frame period starts. Since the count value is two bits or more, the memory 261 has a storage capacity of two bits or more. On the other hand, the accumulating circuit 251 is not reset at the time of the switching of the sub-frame period, and continues the accumulation of the count value from the detection of the photon to the end of the main frame period.

The output signal of the logic circuit 223 is input to the first input terminal of the AND circuit 242, and the output signal of the waveform shaping unit 210 is input to the second input terminal of the AND circuit 242. The AND circuit 242 outputs a logical product of the output signal of the logic circuit 223 and the output signal of the waveform shaping unit 210 to the multiplier 271 (conversion unit).

The output signal of the logic circuit 224 is input to the first input terminal of the AND circuit 243, and the output signal of the waveform shaping unit 210 is input to the second input terminal of the AND circuit 243. The AND circuit 243 outputs a logical product of the output signal of the logic circuit 224 and the output signal of the waveform shaping unit 210 to the multiplier 272.

The multiplier 271 multiplies the output signal of the AND circuit 242 by the count value held in the memory 261. The multiplier 271 outputs a signal (converted signal) indicating a value obtained by the arithmetic processing of the multiplication to the accumulating circuit 252 (first accumulating circuit). The multiplier 272 multiplies the output signal of the AND circuit 243 by the count value held in the memory 261. The multiplier 272 outputs a signal indicating a value obtained by the arithmetic processing of the multiplication to the accumulating circuit 253.

The accumulating circuit 252 generates and holds a count value (first count value) by accumulating the signal value input from the multiplier 271. The accumulating circuit 253 generates and holds a count value by accumulating the signal value input from the multiplier 272. Due to the difference in the weight amount, the count values held by the accumulating circuits 252 and 253 may be different from each other. The signal P_RES is input to the accumulating circuits 251, 252, and 253. The signal P_RES becomes the high level at the start of one main frame. As a result, the count values held in the accumulating circuits 251, 252, and 253 are reset.

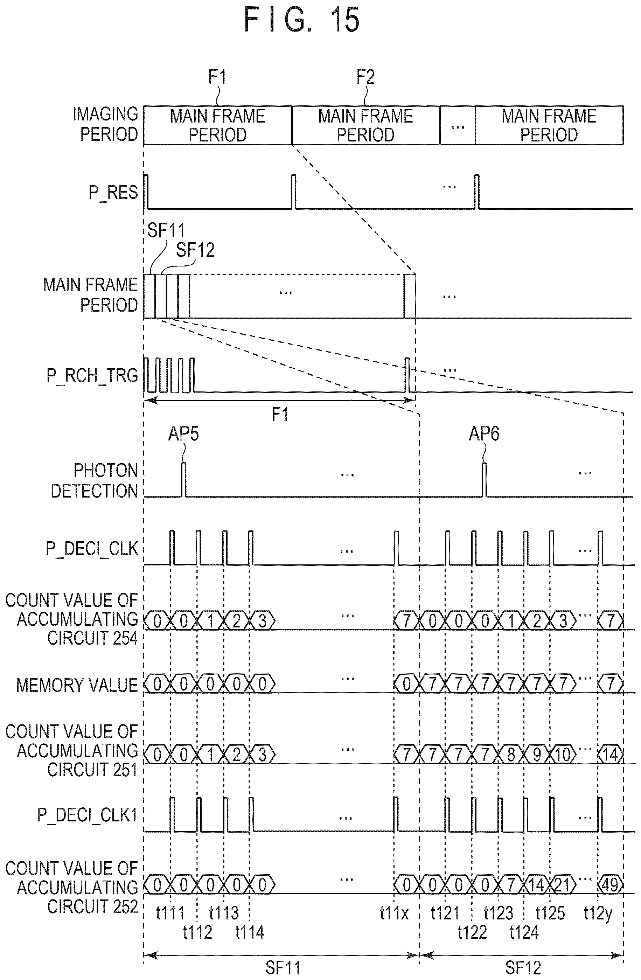

Fig. 15 is a timing chart illustrating a driving method of the pixel 200 according to the present embodiment. Fig. 15 mainly illustrates the operation in the sub-frame periods SF11 and SF12. Descriptions of operations common to any of Figs. 8 to 10 and Fig. 12 will be omitted or simplified.

The "main frame period" in Fig. 15 indicates that the main frame period F1 is divided into a plurality of sub-frame periods SF11, SF12,.... In the present embodiment, unlike the first embodiment to the third embodiment, a sub-frame period is not divided into a plurality of micro-frame periods.

A pulse AP5 illustrated in the "photon detection" in Fig. 15 indicates a timing at which a photon is detected in the sub-frame period SF11. A pulse AP6 illustrated in the "photon detection" in Fig. 15 indicates a timing at which a photon is detected in the sub-frame period SF12.

The "P_DECI_CLK" in Fig. 15 indicates a plurality of pulses of the signal P_DECI_CLK in the sub-frame periods SF11 and SF12. In Fig. 15, the "P_DECI_CLK1" indicates a plurality of pulses of the signal P_DECI_CLK1 in the sub-frame periods SF11 and SF12. In the sub-frame period SF11, the signals P_DECI_CLK and P_DECI_CLK1 become the high level at times t111, t112, t113, t114,... t11x, and then become the low level. In the sub-frame period SF12, the signals P_DECI_CLK and P_DECI_CLK1 become the high level at times t121, t122, t123, t124, t125,... t12y, and then become the low level.

Also in the present embodiment, the weight amounts in the signals P_DECI_CLK and P_DECI_CLK1 may be set by a periodic function such as a sine function as in the first embodiment. In the example of Fig. 15, in the sub-frame period SF11, the number of pulses of the signals P_DECI_CLK and P_DECI_CLK1 corresponding to the weight amount is eight. In the sub-frame period SF12, the number of pulses of the signals P_DECI_CLK and P_DECI_CLK1 corresponding to the weight amount is nine.

In Fig. 15, the "count value of accumulating circuit 254" and the "count value of accumulating circuit 251" indicate temporal changes in the count values held in the accumulating circuits 254 and 251, respectively. In the accumulating circuits 254 and 251, after the photon is detected, an increase in the count value due to the detection of the photon starts from the time when the high-level signal P_DECI_CLK is input first. That is, in the sub-frame period SF11 in which a photon is detected, the count values of the accumulating circuits 254 and 251 increase by one each time the signal P_DECI_CLK becomes the high level at the times t112, t113,... t11x. Accordingly, the count values of the accumulating circuits 254 and 251 at the time t11x of the sub-frame period SF11 are seven.

As described above, in the accumulating circuit 254, the count value is reset for each sub-frame period. Therefore, the count value of the accumulating circuit 254 is reset to zero at the start of the sub-frame period SF12. Thereafter, in the sub-frame period SF12, the count value of the accumulating circuit 254 increases by one each time the signal P_DECI_CLK becomes the high level at the times t123, t124,... t12y after photon detection. Accordingly, the count value of the accumulating circuit 254 at the time t12y of the sub-frame period SF12 is seven.

On the other hand, in the accumulating circuit 251, the count value is not reset at the time of switching of the sub-frame period. Therefore, the count value of the accumulating circuit 254 is maintained at seven at the start of the sub-frame period SF12. Thereafter, in the sub-frame period SF12, the count value of the accumulating circuit 251 increases by one each time the signal P_DECI_CLK becomes the high level at the times t123, t124,... t12y after photon detection. Accordingly, the count value of the accumulating circuit 251 at the time t12y of the sub-frame period SF12 is 14.

The "memory value" in Fig. 15 indicates a temporal change in the count value held in the memory 261. As described above, the memory 261 holds the count value output from the accumulating circuit 254 at the start of one sub-frame period. Therefore, the memory 261 acquires and holds seven, which is the count value obtained by the accumulating circuit 254 in the sub-frame period SF11, at the start of the sub-frame period SF12. In this manner, the memory 261 has a function of holding the count value acquired by the accumulating circuit 254 in the previous sub-frame period.

The "count value of accumulating circuit 252" in Fig. 15 indicates a temporal change in the count value held in the accumulating circuit 252. In the accumulating circuit 252, after the photon is detected, an increase in the count value due to the detection of the photon starts from the time when the high-level signal P_DECI_CLK1 is input first. When one pulse of the signal P_DECI_CLK1 is input, the multiplier 271 multiplies the input value "1" by the value held in the memory 261 and outputs the result to the accumulating circuit 252. That is, in the sub-frame period SF12, when the signal P_DECI_CLK1 becomes the high level at the time t123 after the photon detection, the multiplier 271 outputs a value obtained by multiplying the input value "1" by seven held in the memory 261 to the accumulating circuit 252. As a result, the count value of the accumulating circuit 252 increases from zero to seven. Similarly, at the times t124,... t12y, the count value of the accumulating circuit 252 increases by seven. Accordingly, the count value of the accumulating circuit 252 at the time t12y of the sub-frame period SF12 is 49. Since the change in the count value in the accumulating circuit 253 is the same as that in the accumulating circuit 252 except that the signal P_DECI_CLK2 is input, the description thereof will be omitted.

As described above, in the present embodiment, the memory 261 that holds the count value acquired in the immediately preceding sub-frame period is arranged in the pixel 200. Then, the multipliers 271 and 272 and the accumulating circuits 252 and 253 generate a count value by multiplying the count value of a certain sub-frame period by the count value of the immediately preceding sub-frame period. Therefore, the generated count value has a value amplified based on the amount of incident light in the past sub-frame period. Therefore, as compared with the case where the count value is generated in consideration of only the incident light amount in one sub-frame period, the present embodiment can cope with various amounts of light. Therefore, according to the present embodiment, a photoelectric conversion device capable of performing signal acquisition under various illuminances is provided.

Further, in the photoelectric conversion device of the present embodiment, weighting based on a periodic function such as a trigonometric function may be performed on the output signal. Therefore, the photoelectric conversion device of the present embodiment is applicable to acquisition of a signal for time correlation imaging such as calculation of an optical flow.

In the description of the operation of the pixel 200, specific examples regarding weighting such as the expression of the function of the weight amount, the bit width of the weight amount, and the value of the weight amount are illustrated in some cases, but these examples are not particularly limited and may be appropriately changed. The number of divisions of the sub-frame periods can also be set as appropriate.

The conversion processing performed using the count value held in the memory 261 is not limited to multiplication. For example, each of the multipliers 271 and 272 illustrated in Fig. 14 may be replaced by a shift operation circuit. In this case, the shift operation circuit performs processing corresponding to an operation of substantially multiplying the input value by the count value by performing a bit shift on the input value by a shift amount corresponding to the count value held in the memory 261. As a result, the multiplication processing can be speeded up. The shift operation circuit may include, for example, a demultiplexer.

Fifth Embodiment

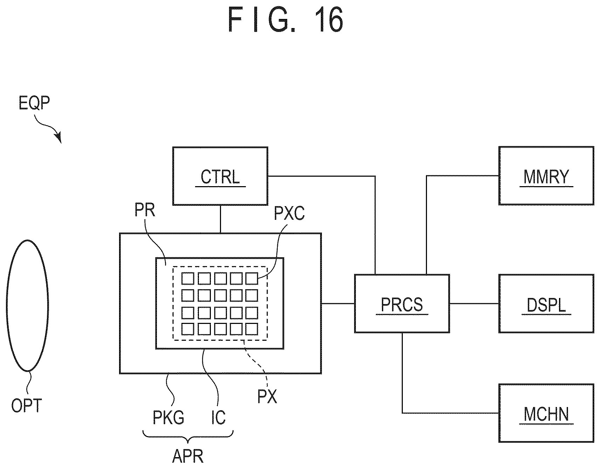

Equipment according to a fifth embodiment will be described with reference to Fig. 16. Fig. 16 is a block diagram illustrating a schematic configuration of equipment according to the present embodiment.

Fig. 16 is a schematic diagram illustrating equipment EQP including a photoelectric conversion device APR. The photoelectric conversion device APR has the function of the photoelectric conversion device 100 according to the first to fourth embodiments. All or part of the photoelectric conversion device APR is a semiconductor device IC. The photoelectric conversion device APR of this example can be used as, for example, an image sensor, an auto focus (AF) sensor, a photometric sensor, a ranging sensor, or the like. The semiconductor device IC has a pixel area PX in which pixel circuits PXC each including photoelectric conversion unit are arranged in a matrix. The semiconductor device IC may have a peripheral area PR around the pixel area PX. Circuits other than the pixel circuits can be arranged in the peripheral area PR.

The photoelectric conversion device APR may have a structure (stacked chips structure) in which a first semiconductor chip provided with a plurality of photoelectric conversion units and a second semiconductor chip provided with a peripheral circuit are stacked. Each of the peripheral circuits in the second semiconductor chip may be a column circuit corresponding to a pixel column of the first semiconductor chip. Each of the peripheral circuits in the second semiconductor chip may be a matrix circuit corresponding to a pixel or a pixel block in the first semiconductor chip. For the connection between the first semiconductor chip and the second semiconductor chip, a through electrode (TSV), an interchip wiring by direct bonding of a conductor such as copper, a connection by a micro bump between chips, a connection by wire bonding, or the like can be employed.

The photoelectric conversion device APR may include a package PKG for mounting the semiconductor device IC in addition to the semiconductor device IC. The package PKG may include a base body to which the semiconductor device IC is fixed, a lid such as glass facing the semiconductor device IC, and a connection member such as a bonding wire or a bump for connecting a terminal provided on the base body and a terminal provided on the semiconductor device IC.

The equipment EQP may further include at least one of an optical device OPT, a control device CTRL, a processing device PRCS, a display device DSPL, a storage device MMRY, and a mechanical device MCHN. The optical device OPT corresponds to the photoelectric conversion device APR, and is, for example, a lens, a shutter, or a mirror. The control device CTRL controls the photoelectric conversion device APR, and is, for example, a semiconductor device such as an ASIC.

The processing device PRCS processes a signal output from the photoelectric conversion device APR, and constitutes an analog front end (AFE) or a digital front end (DFE). The processing device PRCS is a semiconductor device such as a central processing unit (CPU) or an application specific integrated circuit (ASIC). The display device DSPL is an EL display device, a liquid crystal display device, or the like that displays information (image) obtained by the photoelectric conversion device APR. The storage device MMRY is a magnetic device, a semiconductor device, or the like that stores information (image) obtained by the photoelectric conversion device APR. The storage device MMRY is a volatile memory such as an SRAM or a DRAM, or a nonvolatile memory such as a flash memory or a hard disk drive.

In addition, the processing device PRCS may acquire the optical flow by using the signal output from the photoelectric conversion device 100 according to the first to fourth embodiments. For example, the processing device PRCS may generate a weighted correlation image based on a sine function, a weighted correlation image based on a cosine function, and a normal image, and acquire an optical flow from these three images.

The mechanical device MCHN includes a movable portion or a propulsion portion such as a motor or an engine. In the equipment EQP, a signal output from the photoelectric conversion device APR is displayed on the display device DSPL or transmitted to the outside by a communication device (not illustrated) included in the equipment EQP. Therefore, it is preferable that the equipment EQP further include a storage device MMRY and a processing device PRCS separately from the storage circuit unit and the arithmetic circuit unit included in the photoelectric conversion device APR. The mechanical device MCHN may be controlled based on a signal output from the photoelectric conversion device APR.

The equipment EQP illustrated in Fig. 16 may be an electronic device such as an information terminal (for example, a smartphone and a wearable terminal) having a photographing function, a camera (For example, an interchangeable lens camera, a compact camera, a video camera, and a surveillance camera), or the like. The mechanical device MCHN in the camera may drive parts of the optical device OPT for zooming, focusing, and shutter operation. Also, the equipment EQP may be a transport device (movable body) such as a vehicle, a ship, a drone, or an airplane. The equipment EQP may be a medical device such as an endoscope or a CT scanner. The equipment EQP may be a measurement device such as a ranging sensor, an analysis device such as an electron microscope, an office device such as a copier, or an industrial device such as a robot.

The mechanical device MCHN in the transport device may be used as a movable device. The equipment EQP as a transport device is suitable for transporting the photoelectric conversion device APR, or for assisting and/or automating driving (manipulation) by an imaging function. The processing device PRCS for assisting and/or automating driving (manipulation) may perform processing for operating the mechanical device MCHN as a movable device based on information obtained by the photoelectric conversion device APR.

According to the first to fourth embodiments, signal acquisition can be performed satisfactorily. Therefore, the photoelectric conversion device APR according to the first to fourth embodiments may provide a high value to a designer, a manufacturer, a seller, a purchaser, and/or a user thereof. Therefore, when the photoelectric conversion device APR is mounted on the equipment EQP, the value of the equipment EQP may also be increased. Therefore, in manufacturing and selling the equipment EQP, it is advantageous to determine the mounting of the photoelectric conversion device APR of the present embodiment on the equipment EQP in order to increase the value of the equipment EQP. Here, increasing the value corresponds to at least one of adding a function, improving performance, improving characteristics, improving reliability, improving manufacturing yield, reducing environmental load, reducing cost, reducing size, and reducing weight.

For example, by mounting the photoelectric conversion device APR in a transport device, it is possible to obtain excellent performance when photographing outside the transport device or measuring an external environment. Therefore, in manufacturing and selling the transport device, it is advantageous to determine the mounting of the photoelectric conversion device APR according to the present embodiment on the transport device in order to improve the performance of the transport device itself. In particular, the photoelectric conversion device APR is suitable for a transport device that performs driving support and/or automatic driving of the transport device using information obtained by the photoelectric conversion device APR.

Sixth Embodiment

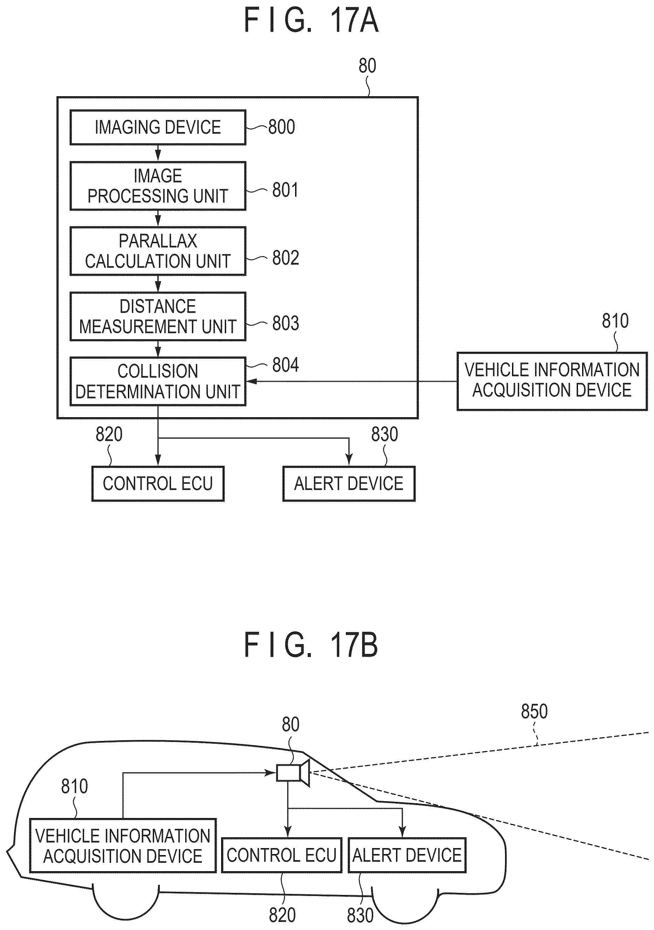

Figs. 17A and 17B are block diagrams of equipment relating to the vehicle-mounted camera according to the present embodiment. Figs. 17A and 17B illustrate an example in which the above-described photoelectric conversion device is applied to a movable body such as a vehicle. The equipment 80 includes an imaging device 800 (an example of the photoelectric conversion device) and a signal processing device (processing device) that processes a signal from the imaging device 800. The equipment 80 includes an image processing unit 801 that performs image processing on a plurality of pieces of image data acquired by the imaging device 800, and a parallax calculation unit 802 that calculates parallax (phase difference of parallax images) from the plurality of pieces of image data acquired by the equipment 80.

Here, the equipment 80 may include an optical system (not illustrated) that guides light to the imaging device 800. The optical system may include, for example, a lens, a shutter, and a mirror. A plurality of photoelectric conversion units substantially conjugate to the pupil of the optical system may be arranged in a pixel included in the imaging device 800. For example, a plurality of photoelectric conversion units are arranged corresponding to one microlens. The plurality of photoelectric conversion units may receive light fluxes transmitted through different positions of the pupil of the optical system. Thus, the imaging device 800 outputs a plurality of pieces of image data respectively corresponding to the light fluxes transmitted through different positions of the pupil of the optical system. Then, the parallax calculation unit 802 may calculate the parallax using the plurality of pieces of image data being output.

The equipment 80 includes a distance measurement unit 803 that calculates a distance to an object based on the calculated parallax, and a collision determination unit 804 that determines whether or not there is a possibility of collision based on the calculated distance. Here, the parallax calculation unit 802 and the distance measurement unit 803 are examples of a distance information acquisition unit that acquires distance information to the object. That is, the distance information is information on a parallax, a defocus amount, a distance to the object, and the like. The collision determination unit 804 may determine the possibility of collision using any of these pieces of distance information. Note that the distance information may be acquired using a time of flight (ToF) technique. The distance information acquisition unit may be realized by dedicatedly designed hardware or software modules. Further, it may be realized by a field programmable gate array (FPGA), an application specific integrated circuit (ASIC) or a combination thereof.

The equipment 80 is connected to the vehicle information acquisition device 810, and can obtain vehicle information such as a vehicle speed, a yaw rate, and a steering angle. Further, the equipment 80 is connected to a control ECU 820 which is a control device that outputs a control signal for generating a braking force to the vehicle based on the determination result of the collision determination unit 804. The equipment 80 is also connected to an alert device 830 that issues an alert to the driver based on the determination result of the collision determination unit 804. For example, when the collision possibility is high as the determination result of the collision determination unit 804, the control ECU 820 performs vehicle control to avoid collision or reduce damage by braking, returning an accelerator, suppressing engine output, or the like. The alert device 830 alerts the user by sounding an alarm such as a sound, displaying alert information on a screen of a car navigation system or the like, or giving vibration to a seat belt or a steering wheel. The equipment 80 functions as a control unit that controls the operation of controlling the vehicle as described above.

In the present embodiment, an image of the periphery of the vehicle, for example, the front or the rear is captured by the equipment 80. Fig. 17B illustrates equipment in a case where an image is captured in front of the vehicle (image capturing range 850). The vehicle information acquisition device 810 as the imaging control unit sends an instruction to the equipment 80 or the imaging device 800 to perform the imaging operation. With such a configuration, the accuracy of distance measurement can be further improved.

Although the example of control for avoiding a collision to another vehicle has been described above, the embodiment is applicable to automatic driving control for following another vehicle, automatic driving control for not going out of a traffic lane, or the like. Furthermore, the equipment is not limited to a vehicle such as an automobile and can be applied to a movable body (movable apparatus) such as a ship, an airplane, a satellite, an industrial robot and a consumer use robot, or the like, for example. In addition, the equipment can be widely applied to equipment which utilizes object recognition or biometric authentication, such as an intelligent transportation system (ITS), a surveillance system, or the like without being limited to movable bodies.

Other Embodiments

The present disclosure is not limited to the above embodiments, and various modifications are possible. For example, an example in which some of the configurations of any one of the embodiments are added to other embodiments or an example in which some of the configurations of any one of the embodiments are replaced with some of the configurations of other embodiments are also embodiments of the present disclosure.

The embodiments described above can be appropriately modified without departing from the technical idea. Note that the disclosure of the present specification includes not only the matters described in the present specification but also all matters that can be grasped from the present specification and the drawings attached to the present specification. Also, the disclosure of the present specification includes a complementary set of the concepts described in the present specification. In other words, for example, when there is a description of "A is greater than B" in the present specification, it can be said that the description of "A is not greater than B" is disclosed in the present specification even when the description of "A is not greater than B" is omitted. This is because it is assumed that the case where "A is not greater than B" is considered when "A is greater than B" is described.

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)$^{™}$), a flash memory device, a memory card, and the like.

It should be noted that the above-described embodiments are merely specific examples for carrying out the present disclosure, and the technical scope of the present disclosure should not be interpreted in a limited manner by these embodiments. That is, the present disclosure can be implemented in various forms without departing from the technical idea or the main features thereof.

Various embodiments have been described in detail above but it will be understood that the present disclosure is not limited to these embodiments and encompasses all modifications, variants, alternatives and equivalents falling within the scope of the appended claims.

Claims

1. A photoelectric conversion device (100) comprising:

an avalanche photodiode (201);
an output holding circuit (230) configured to hold a light reception signal based on an output of the avalanche photodiode (201);
a first logic circuit (241) to which the light reception signal held in the output holding circuit (230) and a first reference signal indicating a first weight amount are input; and

a first accumulating circuit (251) configured to hold a first count value obtained by accumulating an output of the first logic circuit (241),

wherein the first accumulating circuit (251) resets the first count value for each first period,

wherein the first period is divided into a plurality of second periods,

wherein the first weight amount changes for each second period, and

wherein the output holding circuit (230) resets the light reception signal for each second period.

2. The photoelectric conversion device according to claim 1, wherein the output holding circuit holds the light reception signal after a photon is first detected in the second period in the avalanche photodiode.

3. The photoelectric conversion device according to claim 2,

wherein the second period is divided into a plurality of third periods, and

wherein the output holding circuit holds the light reception signal from a third period subsequent to a third period in which a photon is first detected among the plurality of third periods, or

wherein the output holding circuit holds the light reception signal from a third period in which a photon is first detected among the plurality of third periods.

4. The photoelectric conversion device according to claim 2, wherein the output holding circuit holds the light reception signal at a time corresponding to the first reference signal after a photon is first detected in the second period.

5. The photoelectric conversion device according to any one of claims 1 to 4 further comprising:

a second logic circuit to which the light reception signal held in the output holding circuit and a second reference signal indicating a second weight amount are input; and

a second accumulating circuit configured to hold a second count value obtained by accumulating an output of the second logic circuit.

6. The photoelectric conversion device according to any one of claims 1 to 5, wherein the first logic circuit is an AND circuit.

7. A photoelectric conversion device (100) comprising:

an avalanche photodiode (201);

a memory (261) configured to hold a light quantity value of two bits or more generated by a light reception signal based on an output of the avalanche photodiode (201);

a conversion unit (271) to which the light quantity value held in the memory (261) and a first reference signal indicating a first weight amount are input, the conversion unit (271) outputting a converted signal by calculation based on the light quantity value and the first weight amount; and

a first accumulating circuit (252) configured to hold a first count value obtained by accumulating the converted signal,

wherein a first period in which the first accumulating circuit (252) accumulates the first count value is divided into a plurality of second periods,

wherein the first weight amount changes for each second period, and

wherein the light quantity value is generated based on the light reception signal input in one second period.

8. The photoelectric conversion device according to claim 7,

wherein the converted signal has a value obtained by multiplying the first weight amount by the light quantity value, or

wherein the converted signal has a value obtained by performing a shift operation on the first weight amount by a shift amount corresponding to the light amount value.

9. The photoelectric conversion device according to claim 7 or 8, wherein the memory updates the light quantity value every time each of a plurality of second periods starts.

10. The photoelectric conversion device according to any one of claims 7 to 9 further comprising:

a logic circuit to which the light reception signal and a second reference signal indicating a second weight amount are input; and
a second accumulating circuit configured to hold a second count value obtained by accumulating an output of the logic circuit.

11. The photoelectric conversion device according to claim 10, wherein the logic circuit is an AND circuit.

12. The photoelectric conversion device according to any one of claims 1 to 5 and 7 to 11, wherein the first weight amount is determined by a periodic function having a different phase for each second period.

13. The photoelectric conversion device according to claim 12, wherein the periodic function includes a sine function or a cosine function.

14. The photoelectric conversion device according to claim 13, wherein a length of a period of the periodic function is equal to a length of the first period.

15. The photoelectric conversion device according to any one of claims 1 to 6 and 7 to 14, wherein the first reference signal includes a plurality of pulses, the number of the plurality of pulses is associated with the first weight amount.

16. The photoelectric conversion device according to any one of claims 1 to 15 further comprising a processing device configured to acquire an optical flow based on the first count value.

17. Equipment comprising:

the photoelectric conversion device according to any one of claims 1 to 16; and
at least any one of:

an optical device adapted for the photoelectric conversion device,
a control device configured to control the photoelectric conversion device,
a processing device configured to process a signal output from the photoelectric conversion device,
a display device configured to display information obtained by the photoelectric conversion device,
a storage device configured to store information obtained by the photoelectric conversion device, and
a mechanical device configured to operate based on information obtained by the photoelectric conversion device.

18. The equipment according to claim 17, wherein

the processing device acquires an optical flow based on the signal output from the photoelectric conversion device, and/or
the processing device acquires information on a distance from the photoelectric conversion device to an object.

# FIG. 1

# FIG. 2

FIG. 3

# F I G. 4

WEIGHT AMOUNT

TIME

SUB-FRAME PERIOD

MAIN FRAME PERIOD

# F I G. 5

## FIG. 6A

## FIG. 6B

PHOTON INCIDENCE

POTENTIAL OF NODE A

DETERMINATION THRESHOLD VALUE

TIME

t0    t1  t2    t3

## FIG. 6C

POTENTIAL OF NODE B

TIME

FIG. 7

200

211

ACCUMULATING CIRCUIT

251

241

233

D Q
R

230

231

232

1   0

210

VH

202

202a

PCLKB

TCLK

221

222

201

VL

P_DECI_CLK

P_RCH_TRG

P_RCH_TRG3

P_RCH_TRG2

P_RES

# FIG. 8

# FIG. 9

# F I G. 10

F I G. 11

# FIG. 12

# FIG. 13

EP 4 757 336 A1

F I G. 14

# F I G. 15

# F I G. 16

# F I G. 17A

# F I G. 17B

Europäisches
Patentamt
European
Patent Office
Office européen
des brevets

# EUROPEAN SEARCH REPORT

**Application Number**

EP 25 22 0336

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2024/053400 A1 (CANON KK [JP]) 14 March 2024 (2024-03-14) * abstract * & US 2025/203238 A1 (TSUBOI TOSHIKI [JP] ET AL) 19 June 2025 (2025-06-19) * abstract * * figures 1, 5, 8 * * paragraph [0055] * * paragraph [0061] - paragraph [0062] * * paragraph [0074] - paragraph [0079] * ----- | 1-18 | INV. H04N25/47 H04N25/77 H04N25/773 H04N25/78 |
| A | JP 5 007069 B2 (UNIV TOKYO) 22 August 2012 (2012-08-22) * abstract * * figures 2, 3 * * claims 1, 5, 6 * * paragraph [0008] - paragraph [0014] * ----- | 1-18 | |
| A | ANDO SHIGERU ET AL: "Correlation Image Sensor for Algebraic Solution of Optical Flow", IEEE JOURNAL OF THE ELECTRON DEVICES SOCIETY, IEEE, USA, vol. 9, 1 January 2021 (2021-01-01), pages 170-179, XP011839615, DOI: 10.1109/JEDS.2020.3048634 [retrieved on 2021-02-19] * abstract * * figure 1 * * Appendix A * ----- | 1-18 | TECHNICAL FIELDS SEARCHED (IPC) H04N |
| A | JP 2024 032354 A (CANON KK) 12 March 2024 (2024-03-12) * abstract * * paragraph [0010] - paragraph [0020] * ----- | 1-18 | |

The present search report has been drawn up for all claims

| Place of search | Date of completion of the search | Examiner |
|---|---|---|
| Munich | 8 March 2026 | Furlan, Silvano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 25 22 0336

This annex lists the patent family members relating to the patent documents cited in the above-mentioned European search report.
The members are as contained in the European Patent Office EDP file on
The European Patent Office is in no way liable for these particulars which are merely given for the purpose of information.

08-03-2026

| Patent document cited in search report | Publication date | Patent family member(s) | | Publication date |
|---|---|---|---|---|
| WO 2024053400 A1 | 14-03-2024 | CN | 119817110 A | 11-04-2025 |
| | | EP | 4586633 A1 | 16-07-2025 |
| | | JP | 2024038655 A | 21-03-2024 |
| | | KR | 20250057879 A | 29-04-2025 |
| | | US | 2025203238 A1 | 19-06-2025 |
| | | WO | 2024053400 A1 | 14-03-2024 |
| JP 5007069 B2 | 22-08-2012 | JP | 5007069 B2 | 22-08-2012 |
| | | JP | 2007305061 A | 22-11-2007 |
| JP 2024032354 A | 12-03-2024 | NONE | | |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SHIGERU ANDO** ; **AKIRA KIMACHI**. Time-Domain Correlation Imaging and Its Applications. *The transactions of the Institute of Electrical Engineers of Japan, a publication of Sensors and Micromachines Society*, 01 May 2009, vol. 129 (5), 129-137